# NEUE EUROPÄISCHE PATENTSCHRIFT

(11) **EP 1 230 061 B2**
(45) Veröffentlichungstag und Bekanntmachung des Hinweises auf die Entscheidung über den Einspruch: **03.11.2010**
(45) Hinweis auf die Patenterteilung: 30.06.2004
(21) Anmeldenummer: 00974150.5
(22) Anmeldetag: 06.11.2000
(51) Int. Cl.: B23K 9/32, G07C 9/00

(54) **FESTLEGEN UND/ODER FESTSTELLEN VON BENUTZERBERECHTIGUNGEN MITTELS EINES TRANSPONDERS, EINER FINGERABDRUCKERKENNUNG ODER DERGLEICHEN**
ASSESSING AND/OR DETERMINING OF USER AUTHORIZATIONS USING A TRANSPONDER, A FINGER PRINT RECOGNITION ROUTINE OR THE LIKE
DETERMINATION ET/OU VERIFICATION DES AUTORISATIONS D'UTILISATEURS A L'AIDE D'UN REPONDEUR D'IDENTIFICATION, D'UNE RECONNAISSANCE D'EMPREINTE DIGITALE OU EQUIVALENT

(30) Priorität: 05.11.1999 AT 186199; 02.11.2000 AT 186000
(43) Veröffentlichungstag der Anmeldung: 14.08.2002
(73) Patentinhaber: Fronius International GmbH, 4643 Pettenbach (AT)
(72) Erfinder: FRIEDL, Helmut, A-4621 Sipbachzell (AT); FEICHTINGER, Josef, A-4609 Thalheim bei Wels (AT); RUMPL, Manuel, A-4621 Sipbachzell (AT); MITTERHAUSER, Martin, A-4551 Ried im Traunkreis (AT); NIEDEREDER, Franz, A-4652 Fischlham (AT)
(74) Vertreter: Secklehner, Günter
(86) Internationale Anmeldenummer: PCT/AT2000/000289
(87) Internationale Veröffentlichungsnummer: WO 2001/034337

(56) Entgegenhaltungen:
- EP-A1- 0 496 344
- EP-A1- 0 673 704
- EP-A1- 1 010 490
- EP-A1- 1 025 946
- EP-A2- 0 924 656
- DE-A1- 4 230 281
- DE-A1- 19 749 090
- FR-A- 2 711 871
- FR-A1- 2 711 871
- US-A- 4 641 292
- US-A- 4 801 781
- US-A- 4 945 210
- US-A- 4 945 210
- US-A- 5 559 504
- US-A- 5 559 504
- THE NEW POWER SUPPLY FOR THE NEW MILLENNIUM
- SPIEGEL ONLINE ARCHIV ONLINE; FAZ ALLGEMEINE ARCHIV
- FAZ ALLGEMEINE ARCHIV
- SAF CATALOGUE GENERAL 1996,
- ECOS 95
- MICROSOFT WINDOWS 95
- ZEITSCHRIFT FÜR ARBEITSWISSENSCHAFT April 1989,
- ABB WELDING SYSTEMS 11 Mai 1998,

## Beschreibung

Die Erfindung betrifft ein Schweißgerät oder eine Stromquelle, sowie ein Verfahren zum Festlegen von Berechtigungen und einer Zuordnung von personenspezifischen Schweißeinstellungen, wie sie in den Oberbegriffen der Ansprüche 1, 7, 14 und 24 beschrieben sind (siehe, zum Beispiel, FR-A-2 711 871).

Es sind bereits Schweißgeräte oder Stromquellen bekannt, bei denen in Verbindung mit Schlüsselschaltern oder durch die Eingabe von PIN-CODEs eine Zugriffs- und Diebstahlsicherung durchgeführt wird.

Nachteilig ist hierbei, daß bei Verwendung eines Schlüsselschalters unterschiedliche Schlüsselnummern und deren Verwaltung notwendig sind. Weiters muß ein entsprechend sicherer Aufbewahrungsplatz des Schlüssels sichergestellt werden. Bei einem Verlust des Schlüssels muß eine Nachbestellung durchgeführt werden, sodaß eine erhebliche Zeitverzögerung eintritt, in der der Benutzer meist mit einem anderen Schlüssel das Schweißgerät bedienen muß und somit seine persönlichen Schweißeinstellungen nicht verwenden kann. Ein wesentlicher Nachteil liegt auch darin, daß nur ein Schlüsseltyp zur Verfügung steht und somit keine Benutzergruppenvergabe für die Berechtigungen möglich ist.

Wird jedoch ein Schweißgerät eingesetzt, bei dem eine PIN-CODE-Eingabe, also eine Eingabe eines Kennwortes möglich ist, so liegt ein Nachteil darin, daß für die Eingabe eine Einund/oder Ausgabevorrichtung Voraussetzung ist, wobei bei einigen Schweißgeräten oder Stromquellen, insbesondere bei denen, die die Ein- und/oder Ausgabevorrichtung als Zusatzkomponente aufweisen, diese nicht immer zur Verfügung steht. Ein weiterer wesentlicher Nachteil liegt darin, daß die Kennwörter nicht vergessen werden dürfen, sodaß für den Notfall übergeordnete Systeme bzw. Personen eine Freischaltung durchführen müssen.

Dabei sind aus dem Dokument D1 - US 5 559 504 A - mehrere Vorrichtungen, insbesondere für ein Telefon, einen Computer, eine Identitäts-, Chip- oder Magnetkarte, ein Auto oder Motorrad, mit einem Zusatzmodul für eine Personenerkennung über biometrische Körpermerkmale mittels eines Fingerabdrucksensors bekannt, wobei bei einer gültigen Identifizierung einer Person die Benutzung der Vorrichtung möglich ist.

Weiters ist aus Dokument D2 - US 4 945 210 A - ein Lötgerät mit einem Zusatzmodul für eine Benutzererkennung mittels einer Karte zur Erkennung eines Identifikationselements bekannt. Dabei muß der Benutzer zur Inbetriebnahme des Lötgerätes eine Karte in ein integriertes Kartenlesegerät einstecken, wobei bei richtigem Kartencode der Benutzer die Temperatur des Lötgerätes verändern kann.

Aus dem Dokument D3 - FR 2 711 871 - ist ein üblicher Aufbau eines Schweißgerätes bekannt, wobei das Schweißgerät eine Steuervorrichtung, die bevorzugt durch eine Mikroprozessorsteuerung mit einer Speichereinheit gebildet ist, ein Leistungsteil, insbesondere eine Inverterstromquelle, und zusätzliche Komponenten, wie beispielsweise einen Schweißbrenner, ein Drahtvorschubgerät usw. aufweist, die über entsprechende Schnittstellen mit dem Schweißgerät oder der Stromquelle verbunden sind.

Der Erfindung liegt die Aufgabe zugrunde, ein Schweißgerät oder eine Stromquelle sowie ein Verfahren zum Festlegen der Berechtigungen und der Zuordnung von personenspezifischen Schweißeinstellungen zu schaffen, welche unabhängig von mechanischen Komponenten oder geistigen Wissens einer Person eine sichere Diebstahlsicherung und/oder eine Zuordnung persönlicher Schweißeinstellungen ermöglichen.

Diese Aufgabe der Erfindung wird durch die Merkmale im Kennzeichenteil des Anspruches 1 gelöst. Vorteilhaft ist hierbei, daß zur Absicherung sowie Zuordnung der persönlichen Schweißeinstellungen benutzerspezifische biometrische Körpermerkmale verwendet werden und somit keine zusätzliche mechanischen Komponenten, wie ein Schlüssel, mehr benötigt werden. Gleichzeitig wird erreicht, daß sich der Benutzer keine Kennummern merken muß. Ein wesentlicher Vorteil liegt darin, daß keine Manipulationen mehr möglich sind, da für die Inbetriebnahme die biometrischen Körpermerkmale notwendig sind und nicht, wie aus dem Stand der Technik bekannt, durch Diebstahl eines Schlüssels oder durch Auslesens, des Speichers bzw. durch Sehen der Kennummer eine Inbetriebnahme des Schweißgerätes oder der Stromquelle möglich ist.

Weitere vorteilhafte Ausgestaltungen sind in den Ansprüchen 2 bis 6 beschrieben. Die sich daraus ergebenden Vorteile können aus der Beschreibung entnommen werden.

Weiters wird die Aufgabe der Erfindung durch die Maßnahmen im Kennzeichenteil des Anspruches 7 gelöst. Vorteilhaft ist hierbei, daß der Benutzer ohne großen Aufwand die Schweißanlage bzw. das Schweißgerät in Betrieb nehmen kann und anschließend seine persönlichen Schweißeinstellungen bzw. Schweißdaten zur Verfügung hat, wobei keine weiteren Benutzer auf diese Einstellungen bzw. Daten zugreifen können. Ein weiterer Vorteil liegt darin, daß durch die personenbezogene Inbetriebnahme eine Schweißdokumentation durchgeführt werden kann.

Weitere Maßnahmen sind in den Ansprüchen 8 bis 14 beschrieben. Die sich daraus ergebenden Vorteile können aus der Beschreibung entnommen werden.

Unabhängig davon wird die Aufgabe der Erfindung auch durch die Merkmale im Kennzeichenteil des Anspruches 15 gelöst. Vorteilhaft ist hierbei, daß zur Absicherung sowie zur Zuordnung personenspezifischer Schweißeinstellungen handelsübliche weitverbreitete Komponenten herangezogen werden können und dadurch eine kostengünstige und auch sehr störunanfällige Absicherung des Schweißgerätes ermöglicht wird.

Weitere vorteilhafte Ausgestaltungen sind in den Ansprüchen 16 bis 24 beschrieben. Die sich daraus ergebenden Vorteile können der Beschreibung entnommen werden.

Unabhängig davon wird die Aufgabe der Erfindung aber auch durch die Maßnahmen im Kennzeichenteil des Anspruches 25 gelöst. Vorteilhaft ist hierbei, daß eine Inbetriebnahme bzw. eine Zuordnung personenspezifischer Schweißeinstellungen sehr komfortabel bzw. schmutzunempfindlich durch eine kompakte, vom Benutzer des Schweißgerätes leicht mitzuführende Einheit durchgeführt wird.

Weitere vorteilhafte Maßnahmen sind in den Ansprüchen 26 bis 30 beschrieben. Die sich daraus ergebenden Vorteile können der Beschreibung entnommen werden.

Die Erfindung wird anschließend durch ein Ausführungsbeispiel näher beschrieben.

Es zeigen:
- Fig. 1: eine schematische Darstellung einer Schweißanlage bzw. eines Schweißgerätes;
- Fig. 2: ein Blockschaltbild eines Aufbaus einer Schweißanlage bzw. eines Schweißgerätes in vereinfachter, schematischer Darstellung;
- Fig. 3: ein Blockschaltbild eines Aufbaus einer Schweißanlage bzw. eines Schweißgerätes in vereinfachter, schematischer Darstellung.

Einführend wird festgehalten, daß gleiche Teile des Ausführungsbeispieles mit gleichen Bezugszeichen versehen werden. Die im Ausführungsbeispiel angegebenen Lageangaben sind bei einer Lageänderung sinngemäß auf die neue Lage zu übertragen.

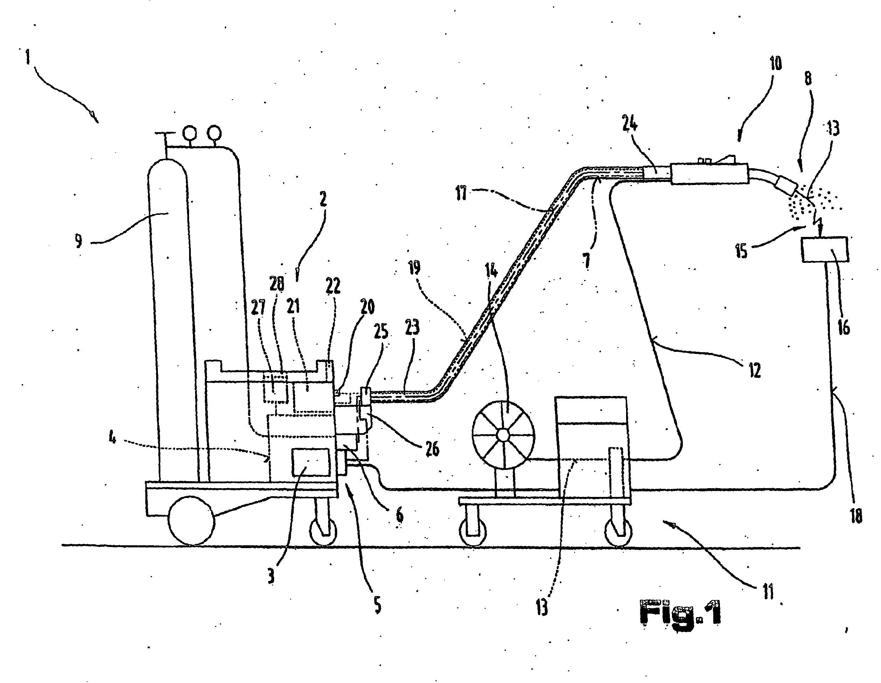

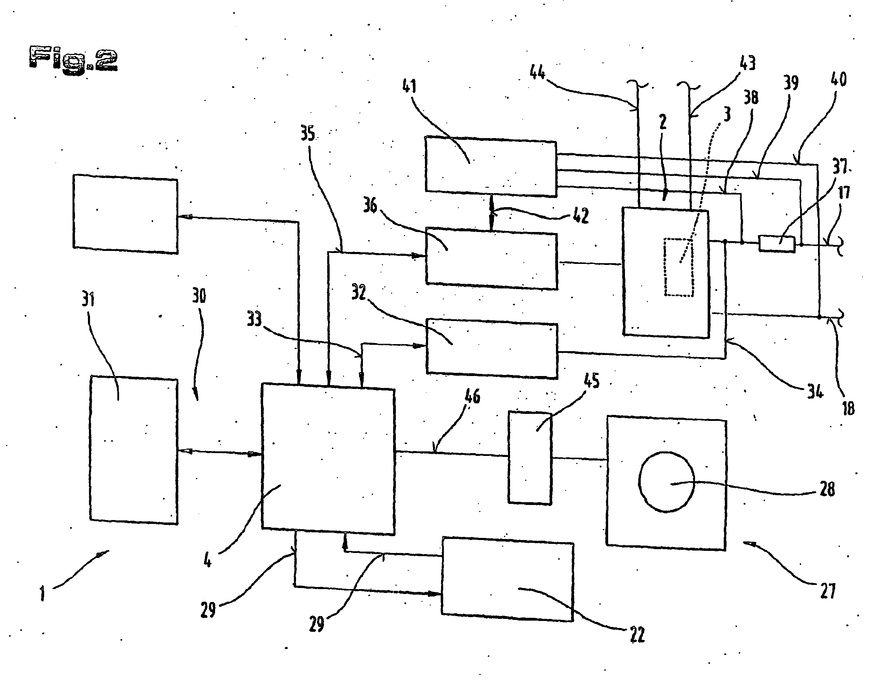

In den Fig. 1 und 2 ist eine Schweißanlage bzw. ein Schweißgerät 1 sowie ein Blockschaltbild des Schweißgerätes 1 für verschiedenste Schweißverfahren, wie z.B. MIG/MAG-Schweißen bzw. TIG-Schweißen oder Elektroden-Schweißverfahren, gezeigt. Selbstverständlich ist es möglich, daß die erfindungsgemäße Lösung bei einer Stromquelle bzw. einer Schweißstromquelle eingesetzt werden kann.

Das Schweißgerät 1 umfaßt eine Stromquelle 2 mit einem Leistungsteil 3, einer Steuervorrichtung 4 und einem dem Leistungsteil 3 bzw. der Steuervorrichtung 4 zugeordnetem Umschaltglied 5. Das Umschaltglied 5 bzw. die Steuervorrichtung 4 ist mit einem Steuerventil 6 verbunden, welches in einer Versorgungsleitung 7 für ein Gas 8, insbesondere ein Schutzgas, wie beispielsweise CO₂, Helium oder Argon und dgl., zwischen einem Gasspeicher 9 und einem Schweißbrenner 10 angeordnet ist.

Zudem kann über die Steuervorrichtung 4 noch ein Drahtvorschubgerät 11, welches für das MIG/MAG-Schweißen üblich ist, angesteuert werden, wobei über eine Versorgungsleitung 12 ein Schweißdraht 13 von einer Vorratstrommel 14 in den Bereich des Schweißbrenners 10 zugeführt wird. Selbstverständlich ist es möglich, daß das Drahtvorschubgerät 11, wie es aus dem Stand der Technik bekannt ist, im Schweißgerät 1, insbesondere im Grundgehäuse, integriert ist und nicht wie in Fig. 1 dargestellt als Zusatzgerät bzw. zusätzliche Komponente ausgebildet ist.

Der Strom zum Aufbauen eines Lichtbogens 15 zwischen dem Schweißdraht 13 und einem Werkstück 16 wird über eine Schweißleitung 17 vom Leistungsteil 3 der Stromquelle 2 dem Schweißbrenner 10 bzw. dem Schweißdraht 13 zugeführt, wobei das zu verschweißende Werkstück 16 über eine weitere Schweißleitung 18 ebenfalls mit dem Schweißgerät 1, insbesondere mit der Stromquelle 2, verbunden ist und somit über den Lichtbogen 15 ein Stromkreis aufgebaut werden kann.

Zum Kühlen des Schweißbrenners 10 kann über einen Kühlkreislauf 19 der Schweißbrenner 10 unter Zwischenschaltung eines Strömungswächters 20 mit einem Flüssigkeitsbehälter, insbesondere einem Wasserbehälter 21, verbunden werden, wodurch bei der Inbetriebnahme des Schweißbrenners 10 der Kühlkreislauf 19, insbesondere eine für die im Wasserbehälter 21 angeordnete Flüssigkeit verwendete Flüssigkeitspumpe, gestartet werden kann und somit eine Kühlung des Schweißbrenners 10 bzw. des Schweißdrahtes 13 bewirkt werden kann.

Das Schweißgerät 1 weist weiters eine Ein- und/oder Ausgabevorrichtung 22 auf, über die die unterschiedlichsten Schweißparameter bzw. Betriebsarten des Schweißgerätes 1 eingestellt und gespeichert werden können. Dabei werden die über die Ein- und/oder Ausgabevorrichtung 22 eingestellten Schweißparameter an die Steuervorrichtung 4 weitergeleitet und von dieser werden anschließend die einzelnen Komponenten der Schweißanlage bzw. des Schweißgerätes 1 angesteuert.

Weiters ist in dem dargestellten Ausführungsbeispiel der Schweißbrenner 10 über ein Schlauchpaket 23 mit dem Schweißgerät 1 bzw. der Schweißanlage verbunden. In dem Schlauchpaket 23 sind die einzelnen Leitungen vom Schweißgerät 1 zum Schweißbrenner 10 angeordnet. Das Schlauchpaket 23 wird über eine zum Stand der Technik zählende Verbindungsvorrichtung 24 mit dem Schweißbrenner 10 verbunden, wogegen die einzelnen Leitungen im Schlauchpaket 23 mit den einzelnen Kontakten des Schweißgerätes 1 über Anschlußbuchsen bzw. Steckverbindungen verbunden sind. Damit eine entsprechende Zugentlastung des Schlauchpaketes 23 gewährleistet ist, ist das Schlauchpaket 23 über eine Zugentlastungsvorrichtung 25 mit einem Gehäuse 26, insbesondere mit dem Grundgehäuse des Schweißgerätes 1, verbunden.

Weiters weist das Schweißgerät 1 ein Zusatzmodul 27 für eine Personenerkennung über biometrische Körpermerkmale auf. Dieses Zusatzmodul 27 ist mit der Steuervorrichtung 4 bzw. mit dem Schweißgerät 1 oder der Stromquelle 2 verbunden, wie dies aus dem Blockschaltbild in Fig. 2 besser ersichtlich ist.

Durch die Verwendung des Zusatzmoduls 27 ist es möglich, daß dadurch eine Diebstahlsicherung und ein Verfahren zum Festlegen der Berechtigungen und der Zuordnung von personenspezifischen Schweißeinstellungen durchgeführt werden kann, wobei aus einer Speichereinheit von der Steuervorrichtung 4 hinterlegte personenbezogene Daten geladen werden und eine entsprechende Einstellung, Steuerung oder Regelung des Schweißgerätes 1 bzw. der Schweißanlage oder der Stromquelle selbständig durchgeführt werden kann. Dabei wird die Zuordnung von der Steuervorrichtung 4 bzw. dem Zusatzmodul 27 durch eine Personenerkennung über biometrische Körpermerkmale, wie beispielsweise einem elektronischen Fingerabdruck, einer Spracherkennung, einer Iriserkennung, einer Gesichtsformerkennung, einer Schriftdynamikerkennung, usw., durchgeführt, sodaß die ermittelten Daten an die Steuervorrichtung 4 des Schweißgerätes 1 oder der Stromquelle 2 weitergeleitet werden können, worauf von dem Zusatzmodul 27 oder der Steuervorrichtung 4 des Schweißgerätes 1 oder der Stromquelle 2 ein Soll/Ist-Vergleich mit in einer Speichereinheit hinterlegten Daten durchgeführt wird.

Das Zusatzmodul 27 wird dabei aus einer zum Stand der Technik zählenden, unabhängigen Baueinheit gebildet. Dabei ist es möglich, daß für die Personenerkennung über biometrische Körpermerkmale unterschiedliche Zusatzmodule 27 eingesetzt werden können, wobei diese Zusatzmodule 27 beispielsweise durch einen Sensor 28, ein Mikrophon oder einer Videokammer mit dazugehöriger Elektronik zur Ermittlung biometrischer Körpermerkmale mit Hilfe einer Fingerabdruckerkennung und/oder einer Spracherkennung und/oder einer Iriserkennung und/oder einer Gesichtsformerkennung und/oder einer Schriftdynamikerkennung und/oder dgl., gebildet sein können.

Das Blockschaltbild weist dabei einen aus dem Stand der Technik bekannten Aufbau auf, sodaß der Aufbau nur mehr in groben Umrissen beschrieben wird. Wie nun besser aus Fig. 2 ersichtlich ist, weist der Aufbau des Schweißgerätes 1 die Steuervorrichtung 4, welche bevorzugt durch eine Mikroprozessorsteuerung bzw. einen Mikrochip gebildet ist, auf. An einem Eingang der Steuervorrichtung 4 ist über Leitungen 29 die Ein- und/oder Ausgabevorrichtung 22 angeschlossen, über die der Benutzer eine Schweißeinstellung vornehmen kann. An weiteren Ein- und Ausgängen der Steuervorrichtung 4 ist über ein Bussystem 30, das aus Adreßund Datenleitungen besteht, eine Speichereinheit 31 angeschlossen, in der sämtliche für den Schweißprozeß benötigte Daten bzw. Sollwerte oder Schweißprogramme gespeichert werden. Dabei ist es auch möglich, daß Daten für das Zusatzmodul 27 in dieser Speichereinheit 31 hinterlegt sein können, sodaß zwischen dem Zusatzmodul 27 und der Speichereinheit 31 bzw. der Steuervorrichtung 4 ein Datenaustausch bzw. Datentransfer für die Erkennung biometrischer Körpermerkmale durchgeführt wird.

Für die Zündung des Lichtbogens 15 weist das Schweißgerät 1 beispielsweise einen Hochfrequenzgenerator 32 auf, der über eine Leitung 33 zum Aktivieren mit der Steuervorrichtung 4 verbunden ist. Der Ausgang des Hochfrequenzgenerators 32 wird dabei über eine Hochfrequenzleitung 34 mit den Schweißleitungen 17, 18, insbesondere der Schweißleitung 17, verbunden, sodaß eine Überlagerung der Schweißspannung mit einem Hochfrequenzsignal zur Zündung des Lichtbogens 15 möglich ist. Selbstverständlich ist es möglich, jedes beliebige aus dem Stand der Technik bekannte Zündsystem zu integrieren.

Weiters ist die Steuervorrichtung 4 über eine oder mehrere Steuerleitungen 35 unter Zwischenschaltung einer Digitalen-Prozeß-Steuerung 36 mit dem Leistungsteil 3, in dem die Stromquelle 2 integriert ist, verbunden. Das Leistungsteil 3 bzw. die Stromquelle 2 wird bevorzugt durch eine Inverterstromquelle gebildet. Über die Schweißleitungen 17, 18 ist der in Fig. 1 gezeigte Schweißbrenner 10 zur Versorgung mit Strom und Spannung an das Leistungsteil 4 angeschlossen, wobei in einer der Schweißleitungen 17, 18, insbesondere in der Schweißleitung 17, eine Meßeinheit, insbesondere ein Shunt 37, angeordnet ist, sodaß ein Istwert für den Schweißstrom und der Schweißspannung über Meßleitungen 38 bis 40 an eine Meßvorrichtung 41 oder einem Digital/Analogwandler zugeführt werden kann.

Diese Meßvorrichtung 41 bzw. ein Digital/Analogwandler ist über Leitungen 42, wovon jedoch nur eine Leitung 42 dargestellt ist, mit der Digitalen-Prozeß-Steuerung 36 verbunden. Damit ist es möglich. daß eine von der Steuervorrichtung 4 unabhängige Regelung des Schweißprozesses von der Digitalen-Prozeß-Steuerung 36 durchgeführt werden kann.

Damit eine Versorgung des Schweißbrenners 10 mit Strom und Spannung möglich ist, ist das Leistungsteil 3 über Versorgungsleitungen 43, 44 mit einem öffentlichen Versorgungsnetz, insbesondere einem 230V~ oder einem 400V~ Wechselspannungsnetz, verbunden, wobei das Leistungsteil 3 eine Umwandlung der gelieferten Energie in eine Schweißenergie vornimmt.

Weiters ist mit der Steuervorrichtung 4 bzw. mit dem Schweißgerät 1 oder einer Stromquelle 2 das Zusatzmodul 27 für eine Personenerkennung über biometrische Körpermerkmale, wie beispielsweise einem elektronischen Fingerabdruck, einer Spracherkennung, einer Iriserkennung, einer Gesichtsformerkennung, einer Schriftdynamikerkennung, usw., verbunden. Das Zusatzmodul 27 ist dabei mit einer standardisierten Schnittstelle 45, welche über Leitungen 46 oder einem Bussystem mit der Steuervorrichtung 4 verbunden ist, gekoppelt. Dadurch ist es möglich, daß die unterschiedlichen Zusatzmodule 27 zur Erfassung der unterschiedlichsten Körpermerkmale, wie beispielsweise einen Fingerabdruck oder einer Iriserkennung, usw., durch einfaches Umrüsten des Schweißgerätes 1 eingesetzt werden können. Dabei ist lediglich eine Softwareanpassung notwendig, die beispielsweise durch Verbinden des Zusatzmoduls 27 mit der Schnittstelle 45 durchgeführt wird. Dazu kann jedes Zusatzmodul 27 eine eigene Speichereinheit aufweisen, sodaß durch einen Datentransfer eine automatische Anpassung an das neu eingesetzte Zusatzmodul 27 durchgeführt werden kann. Es ist auch möglich, daß die Softwareanpassung bzw. das Softwareupdate über eine weitere Schnittstelle, insbesondere eine RS232-Schnittstelle, welche jedoch nicht dargestellt ist, von einem Rechner bzw. PC usw. durchgeführt werden kann.

Durch den Einsatz des Zusatzmoduls 27 wird ein Diebstahlschutz und/oder ein Verfahren zur Vergabe von Benutzerrechten für das Schweißgerät 1 gebildet, wobei als sogenannter Code nunmehr biometrische Körpermerkmale des Benutzers herangezogen werden. Weiters ist es möglich, daß mit diesem realisierten Diebstahlschutz auch eine entsprechende Kennzeichnung am Schweißgerät 1 zur Abschreckung unbefugter Personen angeordnet sein kann und der Zugang zum Schweißgerät 1 oder der Schweißanlage, wie einem Schweißroboter, insbesondere zu bestimmten Daten, Funktionen und Anwendungen, nur berechtigten Personen durch eine positive Erkennung über das Zusatzmodul 27 möglich ist. Weiters ist es möglich, daß die Anbringung des Zusatzmoduls 27 an den unterschiedlichsten Komponenten der Schweißanlage bzw. des Schweißgerätes 1, wie beispielsweise an einer Stromquellenfrontplatte, Fernbedienung, Steuerungsfront, Schweißbrenner 10, Drahtvorschubgerät 11, Kühlgerät, Schlauchpaket 23, externen Halterung, Robotersteuerschrank oder einer Roboterkonsole usw. erfolgen kann, wobei jedoch das Zusatzmodul 27 mit der Steuervorrichtung 4 des Schweißgerätes 1 direkt oder indirekt über eine weiter Steuervorrichtung einer Komponente einen Datenaustausch bzw. Datentransfer durchführen können muß. Selbstverständlich ist es möglich, daß mehrere derartige Zusatzmodule 27 an den unterschiedlichsten Komponenten der Schweißanlage angeordnet werden können, wobei in den unterschiedlichen Komponenten unterschiedliche Zusatzmodule 27 verwendet werden können.

Damit jedoch eine Erkennung einer Person vom Zusatzmodul 27 möglich ist, muß zuerst ein Lernprozeß, also eine Speicherung eines aufgenommenen Körpermerkmals als Vergleichsmuster bzw. Referenzbild, durchgeführt werden. Die Abspeicherung kann dabei in der Speichereinheit 31 oder in einer Speichereinheit im Zusatzmodul 27 selbst erfolgen, sodaß durch neuerliches Einlesen des Körpermerkmals über das Zusatzmodul 27 ein Vergleich mit der neu aufgenommenen Abbildung und dem Vergleichsmuster durchgeführt werden kann und somit der Zutritt gestattet oder verweigert werden kann. Dabei ist es möglich, daß das Zusatzmodul 27 beispielsweise eine eigene Steuervorrichtung, insbesondere eine Mikroprozessorsteuerung oder einen Mikrochip, aufweisen kann und somit ein Vergleich direkt im Zusatzmodul 27 durchgeführt wird.

Da als Zusatzmodule 27 alle aus dem Stand der Technik bekannten Zusatzmodule 27 zur Aufnahme von biometrischen Körpermerkmalen eingesetzt werden können, wird auf das Vergleichsverfahren nicht näher eingegangen. Bevorzugt wird das Vergleichsverfahren vom Zusatzmodul 27 selbst durchgeführt, sodaß dieses bei einem gültigen Vergleich lediglich der Steuervorrichtung 4 eine Benutzerkennung, welche für jedes gespeicherte Vergleichsmuster vergeben wird, übersenden muß, wodurch die Steuervorrichtung 4 des Schweißgerätes 1 eine entsprechende Benutzerverwaltung bzw. die Benutzerrechte zuordnen bzw. vergeben kann.

Anschließend kann von der Steuervorrichtung 4 ein benutzerdefiniertes Programm, insbesondere ein Anwenderprofil, voreingestellt werden, wodurch eine einfache Bedienung der Schweißanlage bzw. des Schweißgerätes erreicht wird. Dieses Anwenderprofil kann dabei unterschiedliche Informationen, welche auf die Einstellungsmöglichkeiten am Schweißgerät rückwirken können, beinhalten. Dabei sind mehrere unterschiedliche Anwenderprofile oder für jeden berechtigten Benutzer ein Anwenderprofil gespeichert, welche die unterschiedlichen Einstellungsmöglichkeiten freischalten oder sperren. Durch die Verwendung von Anwenderprofilen ist es möglich, daß dadurch mehrere Benutzer auf ein Anwenderprofil zurückgreifen und somit eine Anwendergruppe geschaffen werden kann.

Nach Erkennen eines Benutzers, insbesondere nach der Übersendung der Benutzerkennung von dem Zusatzmodul 27, wird von der Steuervorrichtung 4 das entsprechende Anwenderprofil aus der Speichereinheit 31 geladen. Möchte dabei ein Benutzer eine Einstellung vornehmen, für die er keine Freigabe bekommen hat, so wird von der Ein- und/oder Ausgabevorrichtung 22 eine Fehleingabe am Display angezeigt.

Das Anwenderprofil kann beispielsweise durch folgende Informationen gebildet werden, wobei für bestimmte Information entsprechende Berechtigungstabellen und/oder Funktions- oder Verfahrensabläufe in Form von Softwareprogrammen hinterlegt sind, d.h., daß durch die Erkennung des Benutzers ein benutzerdefiniertes Programm voreingestellt wird und somit eine einfache Bedienung des Schweißgerätes 1 geschaffen wird.

Das Anwenderprofil kann beinhalten, ob der Benutzer ein Anfänger, Profi, Programmierer bzw. Einrichter, Qualitätssicherungs-Beauftragter oder Schweißtechniker ist. Darauf können unterschiedliche Freischaltungen beispielsweise der Schweißverfahren oder bestimmter Strombereiche für berechtigte oder geprüfte Schweißer zu den unterschiedlichen Schweißprozessen wie WIG, Elektroden, MIG/MAG usw. oder bestimmter Arbeitsbereiche bzw. Arbeitspunkte, welche beispielsweise aus einer Firmendatenbank stammen, durchgeführt werden. Es können auch Hardwareoptionen wie Jobmaster, Anzeigen, Ferneinsteller bzw. Fernbedienungen freigegeben werden.

Durch das Anwenderprofil ist es auch möglich, daß entsprechende Verwaltungstätigkeiten über das Schweißgerät 1 durchgeführt werden können, die nur entsprechend berechtigten Personen mitgeteilt oder freigeschaltet werden, d.h., daß es beispielsweise möglich ist, daß eine Freischaltung für die Serviceinformationen, Justierfunktionen, der Überwachung und/oder Überprüfung der Schweißprüfungen und deren Dokumentation, welche beispielsweise von der Steuervorrichtung 4 über ein Netzwerk geladen werden kann sowie die Einstellung und Speicherung von benutzerspezifischen Voreinstellungen für den jeweiligen Benutzer bzw. einer Benutzergruppe verwaltet werden können.

Weiters ist es durch die Erkennung des Benutzers möglich, daß am Ende des Zugriffes die Einstellungen am Schweißgerät 1 gespeichert werden und somit bei einem neuerlichen Zugriff eine Wiederherstellung des persönlichen Ausschaltzustandes durchgeführt wird. Damit kann auch eine lückenlose Schweißdokumentation mit dem Schweißgerät 1 sowie eine personenbezogene Datenauswertung, beispielsweise für eine leistungsorientierte Bezahlung, durchgeführt werden.

Durch ein derartiges personenbezogenes Anwenderprofil und somit durch eine derartige Diebstahlsicherung wird in vorteilhafterweise erreicht, daß gegenüber von Diebstahlsicherungen mit Schlössern und dgl. bei verlorengegangenen Schlüsseln kein Schlüsseldienst mehr benötigt wird, da für die Absicherung des Schweißgerätes 1 die biometrischen Körpermerkmale und somit keine Zusatzelemente mehr benötigt werden. Ein weiterer Vorteil liegt darin, daß durch die Verwendung von Anwenderprofilen diese beispielsweise vorab in einem Rechner bzw. PC über ein anwenderfreundliches Softwareprogramm erstellt werden können und anschließend durch eine einfache Datenübertragung dieses an das Schweißgerät 1 weitergeleitet werden können. Durch die Freigabe des Schweißgerätes 1 über biometrische Körpermerkmale ist es auch nicht möglich, daß durch Manipulation ein Zugang zum Schweißgerät 1 geschaffen werden kann.

Durch die Möglichkeit einer sogenannten PC - Programmierung kann an das Schweißgerät 1 ein transportabler oder fixinstallierter Rechner, wie beispielsweise ein Laptop, ein Personalcomputer (PC) oder eine vemetzte Rechneranlage über eine zum Stand der Technik zählende Schnittstelle angeschlossen werden. Die Vergabe der Benutzerrechte und Erkennung der Merkmale erfolgt über ein Softwareprogramm, wobei die Vergabe von Benutzerprofilen anschließend durch Anwahl von werkseitig vorgegeben Profilen oder Vergabe von benutzerdefinierten Funktionen erfolgen kann. Ebenso ist eine parallele Bedienung und Kennung an den unterschiedlichen Komponenten bzw. Bedienelementen der Stromquelle bzw. des Schweißgerätes 1 möglich, wobei hierzu an jeder Komponente ein entsprechendes Zusatzmodul 27 mit einer drahtgebundenen oder drahtlosen Verbindung zur Steuervorrichtung 4 angeordnet ist.

Dabei ist es jedoch möglich, daß unterschiedliche Zusatzmodule 27 für die unterschiedlichsten Körpermerkmale an den unterschiedlichsten Komponenten eingesetzt werden können, da die Erkennung bzw. der Vergleich mit einem hinterlegten Muster bzw. Referenzbild direkt von dem Zusatzmodulen 27 durchgeführt werden kann und somit kein aufwendiger Datenaustausch zwischen dem Zusatzmodul 27 und der Speichereinheit 31 bzw. der Steuervorrichtung 4 durchgeführt werden muß.

Bei der erstmaligen Inbetriebnahme der Schweißanlage bzw. des Schweißgerätes 1 oder der Stromquelle 2 ist es möglich, daß die Vergabe von Benutzerrechten und die Erlernung eines Körpermerkmales eines Benutzers durch Eingabe eines Kennwortes oder sonstigen Zutrittschutzes, wie Schlüsselschalter, Toongle, Freischaltcode, Maus/Tastatur beispielsweise mit Fingerabdruck-Kennung, usw. aktiviert wird. Diese Zutrittsberechtigung bzw. dieser Zusatzschutz kann nach dem Erstzutritt durch die Körperkennung ersetzt oder erweitert werden. Selbstverständlich ist es möglich, daß durch Verbinden des Schweißgerätes 1 bzw. der Schweißanlage mit einem hausinternen Netzwerk auf ein bereits bestehendes zentrales Sicherheitsverwaltungssystem bzw. Hauszutrittskontrollsystem, insbesondere auf deren Daten bzw. Referenzbilder zugegriffen werden kann, sodaß ein entsprechender Lernprozeß für die Speicherung der biometrischen Körpermerkmale entfallen kann, d.h., daß das Schweißgerät 1 oder die Stromquelle 2 über eine standardisierte Schnittstelle 45 und einem Computemetzwerk mit einem zentralen Sicherheitsverwaltungssystem, in dem sämtliche Personendaten gespeichert werden, einen Datenaustausch durchführt. Dazu können auch die Anwenderprofile in diesem externen Zutrittskontrollsystem, insbesondere in dem Hauszutrittskontrollsystem, hinterlegt werden, sodaß von der Steuervorrichtung 4 ein Datentransfer mit diesem System durchgeführt wird und wiederum nach der Inbetriebnahme bzw. nach dem Erkennen des Benutzers sämtliche Daten bzw. Berechtigungen oder Freischaltungen vorhanden sind.

Weiters ist es möglich, daß bei der erstmaligen Inbetriebnahme der Stromquelle bzw. des Schweißgerätes 1 die Schweißanlage bzw. das Schweißgerät 1 mit werkseitigen voreingestellten Funktionen wie einem Diebstahlschutz, der beispielsweise durch Anwahl einer versteckten Funktion, insbesondere einer Geheimkombination von Bedienvorgängen oder Eingabe eines Kennwortes deaktiviert werden kann, ausgestattet ist. Eine Vergabe von Benutzerrechten kann dabei bereits werkseitig durchgeführt werden.

Der Sensor 28 bzw. das Zusatzmodul 27 zur Kennung der biometrischen Körpermerkmale kann als PC-Zusatzgerät und/oder über die Stromquellensensorik, beispielsweise einer Roboterbox, aufgebaut werden. Dabei ist es möglich, daß das Zusatzmodul 27 mit einem Rechner bzw. PC gekoppelt wird, sodaß der Lernmodus für die Erkennung der Benutzer bzw. des Benutzers zuerst am Rechner erfolgt, worauf das Zusatzmodul 27 über die Schnittstelle 45 mit der Steuervorrichtung 4 bzw. einer anderen Komponente der Schweißanlage verbunden wird.

Nach der erstmaligen Inbetriebnahme der Schweißanlage bzw. des Schweißgerätes 1 ist es möglich, daß unterschiedliche Aufforderungen für den Diebstahlschutz eingestellt werden können. Dabei kann der Benutzer zur Codeeingabe oder Eingabe einer Geheimkombination sofort nach dem Einschalten der Anlage durch Anzeigeelemente, beispielsweise Leds, 7-Segmentelemente oder einer LCD-Anzeige, aufgefordert werden. Es ist auch möglich, daß die Diebstahlsicherung bzw. die Zutrittserkennung über das Zusatzmodul 27 erst nach einer Anwahl einer geschützten Funktion aktiviert wird. Selbstverständlich ist es möglich, daß von der Anlage, insbesondere dem Schweißgerät 1 oder einem Rechner eine Löschung der Berechtigung durchgeführt werden kann, sodaß ein abermaliges Inbetriebnehmen von diesem Benutzer unterbunden wird.

Weiters ist es möglich, daß die Daten für die Benutzerkennung, insbesondere die Personendaten oder die Zugriffsberechtigungen, anonym behandelt werden bzw. eine Einstellmöglichkeit vorhanden ist, mit der die Anonymität der einzelnen Personendaten festgelegt werden kann. Es ist auch möglich, daß eine Sicherung oder Speicherung der biometrischen Körpermerkmale nach erstmaliger Freigabe für einen zeitbegrenzten oder uneingeschränkten Zugriff auf das Schweißgerät 1 durchgeführt wird. Ein wesentlicher Vorteil eines derartigen Aufbaus oder Systems liegt auch darin, daß die Benutzererkennung bzw. die Personenerkennung für bestimmte Funktionsaufrufe durchgeführt werden muß, sodaß die Grundfunktionen ohne einer Benutzerkennung möglich sind und somit nur berechtigte Personen zu wesentlichen Funktionsabläufen oder gespeicherten Daten zugreifen können.

Der Aufbau des Schweißgerätes 1 oder der Stromquelle 2 mit dem Zusatzmodul 27 für eine Personenkennung über biometrische Körpermerkmale, wie beispielsweise einen elektronischen Fingerabdruck, einer Spracherkennung, einer Iriserkennung, einer Gesichtsformerkennung, einer Schriftdynamikerkennung, usw., insbesondere eines Fingerabdrucksensors, kann auch derartig erfolgen, daß die Bauelemente durch eine einheitliche Platine für das Schweißgerät 1 und den Fingerabdrucksensor oder direkt vom Schweißprozessor, insbesondere von der Steuervorrichtung 4 des Schweißgerätes 1 realisiert wird.

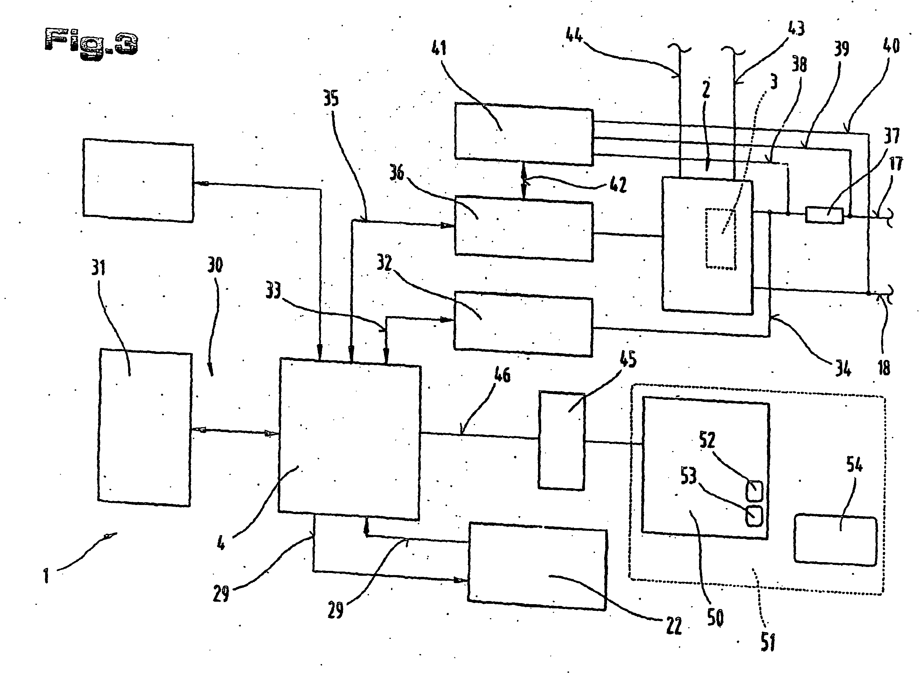

In der Fig. 3 ist ein Blockschaltbild eines Schweißgerätes 1 für verschiedenste Schweißverfahren gezeigt. Dabei weist das Schweißgerät 1 ein Zusatzmodul 50 für eine Benutzererkennung und/oder einer Berechtigungsvergabe beispielsweise mittels einem Transpondersystem 51 und/oder einem Magnetkartensystem und/oder einem Chipkartensystem und/oder einem Bar-Codesystem und/oder einem Speichersystem und/oder einem Funkidentifikationssystem oder dgl., zur Erkennung eines Identifikationselementes auf. Dabei ist in einem Identifikationselement eine Kennung bzw. ein Identifikationscode gespeichert, wobei das Zusatzmodul (50) Mittel zum Auslesen dieser Kennung bzw. des Codes umfaßt.

Das Zusatzmodul 50 dient zur Erfassung einer Kennung bzw. eines Identifikationscodes des Identifikationselementes, wobei von der Steuervorrichtung des Schweißgerätes eine Festlegung der Berechtigungen verschiedener Benutzer und eine Zuordnung von personenspezifischen Schweißeinstellungen zu einem Benutzer durchgeführt wird. Dabei werden aus einer Speichereinheit der Steuervorrichtung 4 entsprechend der Kennung bzw. dem Identifikationscode des Identifikationselementes hinterlegte personenbezogene Daten geladen und eine entsprechende Einstellung, Steuerung und/oder Regelung des Schweißgerätes 1 bzw. der Schweißanlage oder der Stromquelle 2 selbständig durchgeführt. Eine Personenerkennung wird bevorzugt über das Transpondersystem 51 durchgeführt, indem die ermittelten Daten an die Steuervorrichtung 4 oder der Stromquelle 2 weitergeleitet werden, worauf die Steuervorrichtung 4 oder die Stromquelle 2 oder das Zusatzmodul 50 einen Soll-Istvergleich mit in einer Speichereinheit hinterlegten Daten durchführt.

Das Zusatzmodul 50 wird dabei aus einer aus dem Stand der Technik bekannten unabhängigen Baueinheit gebildet oder in der Elektronik des Schweißgerätes bzw. in einer Komponente eines Schweißgerätes integriert, d.h., daß beispielsweise bei der Integration des Zusatzmodules 50 die notwendigen hardwaremäßigen Bauelemente, wie beispielsweise eine Induktionsschleife bei einem Transpondersystem 51 oder einem Magnetstreifenleser bei einem Magnetkartensystem oder dgl, zur Aufnahme des Identifikationscodes vom Identifikationselement eingebaut werden, jedoch die softwaremäßige Steuerung oder Regelung des Zusatzmoduls 50 von der Steuervorrichtung 4 des Schweißgerätes 1 bzw. einer Steuervorrichtung einer beliebigen Komponente des Schweißgerätes 1 durchgeführt wird. Damit wird eine erhebliche Einsparung von Bauelementen, wie beispielsweise einer weiteren Steuervorrichtung, insbesondere eines Mikroprozessors, eines Speichers und anderen Regel- bzw. Steuerkomponenten, erzielt. Durch diese Zusammenlegung der Systeme, also des Steuersystems des Schweißgerätes und des Zusatzmoduls, wird erreicht, daß eine Manipulation zur Inbetriebnahme des Schweißgerätes 1 unmöglich ist, da bei einem Austausch der Komponenten des Zusatzmodules 50 die Berechtigungen bzw. Identifikationscodes nach wie vor im Schweißgerät 1 gespeichert sind.

Dabei ist es möglich, daß für die Personenerkennung über das Transpondersystem 51 unterschiedliche Zusatzmodule 50 eingesetzt werden, wobei diese Zusatzmodule 50 beispielsweise durch einen Sender 52 und einen Empfänger 53 mit dazugehöriger Elektronik zur Ermittlung bzw. Aufnahme der Daten eines Identifikationselementes, insbesondere eines Transponders 54, welcher vom Benutzer des Schweißgerätes 1 verwahrt wird, gebildet sind.

Das Identifikationselement kann beispielsweise durch einen Transponder 54, eine Bankomatkarte, eine Berechtigungskarte für ein Zutrittssystem, einen Autoschlüssel mit integriertem Transponder 54 für eine Wegfahrsperre oder eine beliebige Magnet- bzw. SIM- bzw. Chipkarte und/oder eine beliebige Karte, beispielsweise einem Ausweis, mit einem Barcode oder einer Kombination daraus gebildet sein. Damit wird erreicht, daß für die Inbetriebnahme und die Berechtigungsvergabe des Schweißgerätes 1 handelsübliche Ausweiskarten verwendet werden, die der Benutzer in anderen Bereichen, wie beispielsweise einem Zutrittskontrollsystem oder bei einem Zahlungssystem, wie einem Bankomaten, ebenfalls einsetzen kann und somit nicht mehr mehrere Ausweiskarten bzw. Identifikationselemente mit sich herumtragen muß. Dadurch wird in vorteilhafter Weise erreicht, daß ein derartiges Identifikationselement bzw. eine derartige Ausweiskarte für sämtliche Sicherheitsvorkehrungen in einem Werksgelände verwendet werden kann. Damit wird eine wesentliche Vereinfachung bei der Verwaltung, Wartung usw. erzielt, da jeder Person nur mehr ein einziger Identifikationscode zugeordnet werden muß.

Das Identifikationselement, insbesondere der Transponder 54, ist vorteilhafterweise als passives Bauelement, d.h. ohne eigene Energieversorgung, ausgebildet, wobei für das Auslesen des Identifikationscodes der Transponder 54 vom Zusatzmodul 50, insbesondere vom Transpondersystem 51, mit Energie beaufschlagt wird.

Diese Energiezufuhr kann beispielsweise über eine Induktionsschleife realisiert sein.

Das Zusatzmodul 50 kann je nach Art und Ausgestaltung der zu verwendenden Transponder 54 mit einem Sende- und/oder Empfangsfeld zum Auslesen des Transpondercodes versehen sein. Es ist aber auch möglich, einen Schlitz zum Durchziehen des Transponders 54 auszuführen, wobei beim Durchziehen des Transponders 54 durch den Schlitz der Identifikationscode, insbesondere der Transpondercode, ausgelesen wird, wie dies beispielsweise bei Magnetkarten-Lesegeräten oder PIN-Code-Lesegeräten durchgeführt wird.

Der weitere Aufbau des Blockschaltbildes in Fig. 3 ist gleich gewählt wie in Fig. 2 und es wird an dieser Stelle auf die Beschreibung dieser Figur verwiesen. Hierzu wird auch auf die beschriebenen Funktionen bzw. Abläufe in Fig. 2 verwiesen, die ebenfalls mit dem in Fig. 3 beschriebenen Ausführungsbeispiel verwirklicht werden können, wobei hierbei lediglich anstelle der Aufnahme von biometrischen Körpermerkmalen eine Identifizierung über ein Identifikationselement, insbesondere über einen Identifikationscode, durchgeführt wird.

An Ein- und Ausgängen der Steuervorrichtung 4 ist über ein Bussystem 30, das aus Adreßund Datenleitungen besteht, eine Speichereinheit 31 angeschlossen, in der sämtliche für den Schweißprozeß benötigte Daten bzw. Sollwerte oder Schweißprogramme gespeichert werden. Es ist auch möglich, daß Daten für das Zusatzmodul 50 in dieser Speichereinheit 31 hinterlegt sind, sodaß zwischen dem Zusatzmodul 50 und der Speichereinheit 31 bzw. der Steuervorrichtung 4 ein Datenaustausch bzw. Datentransfer für die Erkennung des Transponders 54 durchgeführt wird.

Das Zusatzmodul 50 ist mit einer standardisierten Schnittstelle 45, welche über Leitungen 46 oder einem Bussystem mit der Steuervorrichtung 4 verbunden ist, gekoppelt. Dadurch ist es möglich, daß unterschiedliche Zusatzmodule 50 zur Erfassung unterschiedlicher Transponder 54 durch einfaches Umrüsten des Schweißgerätes 1 eingesetzt werden können.

Durch den Einsatz des Zusatzmodules 50 wird ein Diebstahlschutz und/oder eine Vergabe von Benutzerrechten für das Schweißgerät 1 durchgeführt, wobei als Sicherheitscode nunmehr der Transponder des Benutzers, insbesondere der Identifikationscode bzw. Transpondercode, herangezogen wird.

Damit eine Erkennung einer Person durch das Zusatzmodul 50 möglich ist, muß zuerst ein Lernprozeß, also eine Speicherung eines festgelegten Identifikationscodes bzw. Transpondercodes als Vergleichsmuster bzw. Referenzcode durchgeführt werden.

Die Abspeicherung dieses Referenzcodes kann dabei im Zusatzmodul 50 oder in der Steuervorrichtung 4 erfolgen, sodaß bei einem neuerlichen Einlesen des Transpondercodes ein Vergleich dieses eingelesenen Transpondercodes mit dem Referenzcode durchgeführt wird und somit der Zutritt gestattet oder verweigert wird. Selbstverständlich ist es zu diesem Zweck möglich, das Zusatzmodul 50 mit einer eigenen Steuervorrichtung, insbesondere einer Mikroprozessorsteuerung oder einem Mikrochip, auszustatten. Bevorzugt wird jedoch die der Referenzcode bzw. Identifikationscode in der Speichereinheit 31 für die Steuervorrichtung 4 gespeichert, da dadurch gleichzeitig eine Zuordnung zu den einzelnen Berechtigungen bzw. Schweißeinstellung oder Schweißparametern für die erlaubten Einstellmöglichkeiten bzw.

Zugriffsmöglichkeiten auf das Schweißgerät 1 geschaffen werden können und somit eine doppelte Verwaltung im Zusatzmodul 50 und in der Steuervorrichtung 4 verhindert wird, d.h., daß vom Zusatzmodul 50 lediglich der Identifikationscode aufgenommen bzw. erfaßt wird und anschließend die Auswertung, Zuordnung usw. von der Steuervorrichtung 4 des Schweißgerätes 1 oder einer anderen Steuervorrichtung einer Komponente des Schweißgerätes 1 durchgeführt wird.

Weiters besteht die Möglichkeit, einen Teil dieses Lernprozesses bereits werkseitig durchzuführen und so beispielsweise eine Generalzugriffsberechtigung für Servicetechniker zu realisieren. Dabei werden werkseitig für das Servicepersonal Identifikationselemente bzw. Transponder mit bestimmten Transpondercodes festgelegt und diese durch den Lernprozeß dem Zusatzmodul 50 bekanntgegeben und mit den jeweils gewünschten Zugriffsrechten ausgestattet. Dadurch wird sichergestellt, daß dem Servicepersonal unabhängig von später durch bzw. an Benutzer vergebene Zugriffsrechte ein übergeordnetes Zugriffsrecht auf das Schweißgerät 1 gewährt wird.

Bei der erstmaligen Inbetriebnahme des Schweißgerätes 1 bzw. der Schweißanlage oder der Stromquelle 2 ist es möglich, daß für die Vergabe von Benutzerrechten und die Durchführung von Lernprozessen für das Transpondersystem 51 die Eingabe eines Kennwortes erforderlich ist oder ein sonstiger Zutrittsschutz, wie beispielsweise ein Schlüsselschalter, Toongle, Freischaltcode oder dgl., verwendet wird. Diese Zutrittsberechtigung bzw. dieser Zusatzschutz kann nach dem Erstzutritt und dem Lernprozeß für das Transpondersystem 51 wegfallen.

Es ist möglich, daß durch Verbinden des Schweißgerätes 1 bzw. der Schweißanlage mit einem hausinternen Netzwerk auf ein bereits bestehendes zentrales Sicherheitsverwaltungssystem, z.B. ein Hauszutrittskontrollsystem, zugegriffen wird. D.h., daß entsprechende Lernprozesse für die Speicherung der Referenzcodes nicht direkt am Transpondersystem 51 des Schweißgerätes 1 durchgeführt werden müssen, sondern diese Referenzcodes über die standardisierte Schnittstelle 45 über eine Datenleitung, insbesondere ein Computernetzwerk, durch das Sicherheitsverwaltungssystem bzw. das Hauszutrittskontrollsystem zur Verfügung gestellt werden.

Unabhängig davon, ob ein Lernprozeß für einen Referenzcode des Transponders 54 direkt am Transpondersystem 51 oder an einem Hauszutrittskontrollsystem durchgeführt wird, können diesem Referenzcode beliebige Rechte zugewiesen werden und es können personenspezifische Einstellungen hinterlegt sein.

Durch eine Vernetzung eines oder mehrerer Schweißgeräte 1 kann eine Vielzahl von vorteilhaften Anwendungen realisiert werden. Dabei ist es möglich, daß beispielsweise sämtliche Daten für die Identifizierung und/oder Berechtigungsvergabe auf einem Zentralrechner gespeichert werden, wodurch eine sehr einfache Wartung dieser Daten erzielt wird, da die Wartung nicht mehr direkt bei jedem Schweißgerät 1 gesondert durchgeführt werden muß. Hierzu ist es möglich, daß von einem Schweißgerät 1 der über das Zusatzmodul 50 aufgenommene Identifikationscode an diesen Zentralcomputer übertragen wird, der die Überprüfung der Identität der Person, sowie die Zuordnung der Berechtigung und/oder die Zuordnung der personenbezogenen Schweißdaten durchführt. Anschließend werden die Berechtigungen bzw. die personenbezogenen Daten über das Netzwerk an das entsprechende Schweißgerät 1 übersandt, so daß der Benutzer bzw. die Person alle benötigten Daten bzw. Berechtigungen auf diesem Schweißgerät 1 zur Verfügung hat.

Der Vorteil liegt nun vor allem darin, daß bei einer Vielzahl von Schweißgeräten 1 in einem Werksgelände diese Daten nicht in jedem Schweißgerät 1 gespeichert werden müssen, sondern diese Zentral abgelegt werden. Auch bei Änderungen bezüglich der Berechtigungen und der personenbezogenen Daten können diese nunmehr im Zentralrechner durchgeführt werden, so daß eine wesentliche Wartungseinsparung für die Schweißgeräte 1 erzielt wird.

Ein derartiges System wird bevorzugt bei Großfirmen beispielsweise in der Autoindustrie oder im Schiffsbau eingesetzt, da hier sehr viele Schweißgeräte 1 im Einsatz sind und nicht jede Person jede Art von Schweißprozessen ausführen darf, da hierzu entsprechende Schweißprüfungen benötigt werden. Damit ist ein wesentlicher Vorteil eines derartigen Systems einfach ersichtlich, da durch eine abgelegte Schweißprüfung bzw. bei Neuzugängen von Schweißpersonal nunmehr diese Person auf sämtlichen Schweißgeräten 1 den entsprechend geprüften Schweißprozeß durchführen darf, so daß ohne das Vernetzen der Schweißgeräte 1 das Wartungspersonal die Berechtigungsänderungen an allen Schweißgeräten 1 vor Ort umstellen müßte, wogegen durch die zentrale Speicherung und Vernetzung dies auf nur einer Komponente, insbesondere auf dem Zentralrechner, durchgeführt werden muß, so daß anschließend in einfacher Form die Schweißgeräte an die neuen Bedingungen angepaßt werden können.

Damit jedoch im Zentralcomputer spezielle Einstellungen für eine Person gespeichert werden können, werden nach einem Ende eines Schweißprozesses sämtliche Daten über das Netzwerk an den Zentralrechner übersendet und gespeichert, so daß bei einem neuerlichen Schweißprozeß auf irgend einem Schweißgerät 1 im Netzverbund der Benutzer bzw. die Person wieder alle Daten bzw. Schweißeinstellungen zur Verfügung hat. Damit dies jedoch möglich ist, ist eine eindeutige Identifizierung der Person notwendig, wodurch das Schweißgerät 1 mit einem entsprechenden Zusatzmodul 50, insbesondere einem Transpondersystem 51, ausgestattet ist. Der Benutzer bzw. die Person trägt dabei ein entsprechendes Identifikationselement, insbesondere eine Ausweiskarte, Erkennungskarte oder einen Transponder 54, mit einer eindeutig zugeordneten Identifikationsnummer bzw. Identifikationscode mit sich, so daß eine eindeutige Identifizierung bzw. Aufnahme des Identifizierungscodes der Person vom Schweißgerät 1 über das Zusatzmodul 50 vorgenommen werden kann.

Weiters wird durch die Vernetzung eines oder mehrerer Schweißgeräte 1 ermöglicht, daß die Wartung der Daten bzw. der Berechtigungen im Zentralrechner erfolgen kann, wobei anschließend über das Netzwerk die einzelnen Schweißgeräte 1 mit den entsprechenden Daten bzw. Berechtigungen versorgt werden und diese direkt im Schweißgerät 1 gespeichert werden. Dadurch kann der Datentransfer über das Netzwerk erheblich reduziert werden.

Da in der heutigen Zeit immer mehr eine auftragsbezogene Produktion realisiert wird, ist es oft erforderlich, daß innerhalb kurzer Zeit eine entsprechende Umstellung der Geräte auf unterschiedliche Typen bzw. auf unterschiedliche Schweißprozesse durchgeführt werden muß. Damit dabei der Zeitaufwand sowie der Personalaufwand für das Wartungspersonal erheblich eingespart werden kann, ist es mit einem derartigen System, insbesondere mit derartigen Schweißgeräten 1, die mit einem Zusatzmodul 50 zur Ermittlung eines Identifikationscodes ausgestattet sind, möglich ist, daß eine automatische Umstellung des Schweißgerätes 1 in kürzester Zeit möglich. Dabei wird beispielsweise in einer Fertigungsstraße jedes herzustellende Produkt, wie beispielsweise eine Autokarosserie, mit einem Identifikationselement, insbesondere einem Transponder 54, ausgestattet, so daß bei jeder Station, insbesondere Schweißstation, von dem dazugehörigen Schweißgerät 1 der Identifikationscode erfaßt werden kann und somit für diesen Identifikationscode bzw. Produktcode die entsprechenden Schweißeinstellungen automatisch eingestellt werden. Damit wird eine sehr rasche Umrüstung bzw. Umstellung einer Fertigungsstraße auf die unterschiedlichsten Produkte erzielt, wobei hierzu lediglich am Beginn der Produktion ein entsprechendes Identifikationselement angeordnet werden muß.

Die Erstellung, Wartung und Überwachung kann dabei durch die Vernetzung der Schweißgeräte 1 von dem Zentralcomputer übernommen werden. Bevorzugt werden bei einer derartigen Fertigungsstraße natürlich auch die anderen Produktionsmaschinen, wie beispielsweise eine Roboteranlage, mit einem derartigen Zusatzmodul 50 ausgestattet, so daß eine vollständige Anpassung der Fertigungsstraße über ein entsprechendes Identifikationselement, insbesondere dem Transponder 54, durchgeführt werden kann.

Ein weitere Einsatzmöglichkeit für derartige Schweißgeräte 1 mit einem Zusatzmodul 50 zum Erkennen eines Identifikationscodes liegt darin, daß eine innerbetriebliche Überwachung der Anlagen beispielsweise über den Zentralrechner durchgeführt werden kann. Dies kann derartig erfolgen, daß am Zentralrechner sämtliche Geräte ersichtlich sind, wobei bei einer Inbetriebnahme zu diesen Geräten der entsprechende Identifikationscode zugeordnet wird.

Der Transpondercode bzw. der Referenzcode des Transponders 54 ist üblicherweise durch eine vielstellige Zahl gebildet. Es ist aber ebenfalls möglich, diesen Code durch einen alpha-numerischen Code oder durch einen beliebigen, aus dem Stand der Technik bekannten Code zu bilden.

Weiters ist es möglich, handelsübliche Transponder 54 zu benutzen, welche bereits einen programmierten Transpondercode aufweisen, oder frei programmierbare Transponder 54 zu benützen und vor einem Lernprozeß des Transpondersystems 51 dem Transponder 54 einen Transpondercode zuzuweisen.

Beispielsweise können Transponder 54 für Servicetechniker durch programmierbare Transponder 54 ausgeführt werden, wobei mehreren Transpondern 54 immer der gleiche Transpondercode zugeteilt wird, und Transponder 54 für weitere Benutzer durch nicht programmierbare Transponder 54, welche immer einzigartige Transpondercodes aufweisen realisiert werden.

Abschließend sei der Ordnung halber darauf hingewiesen, daß in den Zeichnungen die Baugruppen bzw. Module nur schematisch dargestellt sind, wobei diese aus allen aus dem Stand der Technik bekannten Baugruppen bzw. Modulen gebildet werden können.

### Bezugszeichenaufstellung

- 1: Schweißgerät
- 2: Stromquelle
- 3: Leistungsteil
- 4: Steuervorrichtung
- 5: Umschaltglied

- 6: Steuerventil
- 7: Versorgungsleitung
- 8: Gas
- 9: Gasspeicher
- 10: Schweißbrenner

- 11: Drahtvorschubgerät
- 12: Versorgungsleitung
- 13: Schweißdraht
- 14: Vorratstrommel
- 15: Lichtbogen

- 16: Werkstück
- 17: Schweißleitung
- 18: Schweißleitung
- 19: Kühlkreislauf
- 20: Strömungswächter

- 21: Wasserbehälter
- 22: Ein- und/oder Ausgabevorrichtung
- 23: Schlauchpaket
- 24: Verbindungsvorrichtung
- 25: Zugentlastungsvorrichtung

- 26: Gehäuse
- 27: Zusatzmodul
- 28: Sensor
- 29: Leitung
- 30: Bussystem

- 31: Speichereinheit
- 32: Hochfrequenzgenerator
- 33: Leitung
- 34: Hochfrequenzleitung
- 35: Steuerleitung

- 36: Digitale-Prozeß-Steuerung
- 37: Shunt
- 38: Meßleitung
- 39: Meßleitung
- 40: Meßleitung

- 41: Meßvorrichtung
- 42: Leitung
- 43: Versorgungsleitung
- 44: Versorgungsleitung
- 45: Schnittstelle

- 46: Leitung

- 50: Zusatzmodul

- 51: Transpondersystem
- 52: Sender
- 53: Empfänger
- 54: Transponder

## Patentansprüche

1. Schweißgerät (1) oder Stromquelle (2) für ein Schweißgerät (1), mit einer Steuervorrichtung (4), die durch eine Mikroprozessorsteuerung mit einer Speichereinheit (31) gebildet ist, einem Leistungsteil (3), insbesondere einer Inverterstromquelle, und zusätzlichen Komponenten, wie beispielsweise einem Schweißbrenner (10), einem Drahtvorschubgerät (11) usw., die über entsprechende Schnittstellen (45) mit dem Schweißgerät (1) oder der Stromquelle (2) verbunden sind, **dadurch gekennzeichnet, daß** mit der Steuervorrichtung (4) bzw. mit dem Schweißgerät (1) oder der Stromquelle (2) ein Zusatzmodul (27) für eine Personenerkennung über biometrische Körpermerkmale mittels einer Fingerabdruckerkennung und/oder einer Spracherkennung und/oder einer Iriserkennung und/oder einer Clesichtsformerkennung und/oder einer Schriftdynamikerkennung oder dgl., verbunden ist und an der Steuervorrichtung (4) ein oder mehrere benutzerdefinierte Programme durch Laden von einem oder mehreren entsprechenden Anwenderprofien voreinstellbar sind, indem nach Erkennen eines Benutzers durch das Zusatzmodul (27) von der Steuervorrichtung (4) das entsprechende Anwenderprofil aus der Speichereinheit (31) geladen wird, wobei bei neuerlichem Aktivieren bzw. Einschalten des Schweißgerätes (1) oder der Stromquelle (2) von derselben Person eine Wiederherstellung des persönlichen Ausschaltzustandes dieser Person von der Steuervorrichtung (4) durchführbar ist.

2. Schweißgerät (1) oder Stromquelle (2) nach Anspruch 1, **dadurch gekennzeichnet, daß** das Zusatzmodul (27) durch einen Sensor, wie einen Fingerabdrucksensor, eine Videoeinheit usw., gebildet ist.

3. Schweißgerät (1) oder Stromquelle (2) nach Anspruch 1 oder 2, **dadurch gekennzeichnet, daß** das Zusatzmodul (27) eine Steuervorrichtung, insbesondere eine Mikroprozessorsteuerung oder einen Mikrochip, aufweist.

4. Schweißgerät (1) oder Stromquelle (2) nach einem der vorhergehenden Ansprüche, **dadurch gekennzeichnet, daß** das Zusatzmodul (27) in einer oder mehreren Komponenten des Schweißgerätes (1), wie beispielsweise einer Fernbedienung bzw. einem Fernregler und/oder einem Schweißbrenner (10) und/oder einer externen Halterung und/oder einem Drahtvorschubgerät (11) und/oder einem Kühlgerät und/oder einem Schlauchpaket (23) und/oder einem Roboterschrank und/oder einer Roboterkonsole und/oder einer Steuerungsfront und/oder einer Ein- und/oder Ausgabevorrichtung (22) oder dgl., angeordnet ist.

5. Schweißgerät (1) oder Stromquelle (2) nach einem der vorhergehenden Ansprüche, **dadurch gekennzeichnet, daß** in unterschiedlichen Komponenten unterschiedliche Zusatzmodule (27) einsetzbar sind.

6. Schweißgerät (1) oder Stromquelle (2) nach einem der vorhergehenden Ansprüche, **dadurch gekennzeichnet, daß** das Zusatzmodul (27) mit einer standardisierten Schnittstelle (45), welche über Leitungen (46) oder einem Bussystem mit der Steuervorrichtung (4) verbunden sind, gekoppelt ist.

7. Verfahren zum Festlegen und/oder Feststellen einer Benutzerberechtigung und zum Zuordnen von personenspezifischen Schweißeinstellungen für ein Schweißgerät (1) bzw. eine Schweißanlage oder eine Stromquelle (2) für ein Schweißgerät (1), bei dem in einer Speichereinheit (31) einer Steuervorrichtung (4) hinterlegte personenbezogene Daten geladen werden und eine entsprechende Einstellung Steuerung oder Regelung des Schweißgerätes (1) bzw. der Schweißanalge oder der Stromquelle (2) durchgeführt wird, wobei von einem Zusatzmodul (27) eine Personenerkennung über biometrische Körpermerkmale, wie beispielsweise einem elektronischen Fingerabdruck und/oder einer Spracherkennung und/oder einer Iriserkennung und/oder einer Gesichtsformerkmaung und/oder einer Schriftdynamikerkennung oder dgl., durchgeführt wird, worauf die ermittelten Personendaten zur Überprüfung an die Steuervorrichtung (4) des Schweißgerätes (1) oder der Stromquelle (2) weitergeleitet werden und an der Steuervorrichtung (4) ein oder mehrere benutzerdefinierte Programme durch Laden von einem oder mehreren entsprechenden Anwenderprofilen voreingestellt werden, indem nach Erkennen eines Benutzers durch das Zusatzmodul (27) von der Steuervorrichtung (4) das entsprechende Anwenderprofil aus der Speichereinheit (31) geladen wird, wobei bei neuerlichem Aktivieren bzw. Einschalten des Schweißgerätes (1) oder der Stromquelle (2) von derselben Person eine Wiederherstellung des persönlichen Ausschaltzustandes dieser Person von der Steuervorrichtung (4) durchgeführt wird.

8. Verfahren nach Anspruch 7, **dadurch gekennzeichnet, daß** von dem Zusatzmodul (27) oder der Steuervorrichtung (4) des Schweißgerätes (1) oder der Stromquelle (2) ein Soll/ Ist-Vergleich mit in einer Speichereinheit (31) hinterlegten Daten durchgeführt wird.

9. Verfahren nach Anspruch 7 oder 8, **dadurch gekennzeichnet, daß** das Zusatzmodul (27) für die Erfassung biometrischer Körpermerkmale als Diebstahlschutz verwendet wird, wobei berechtigten Personen der Zugang zu bestimmten Daten, Funktionen und Anwendungen von der Steuervorrichtung (4) gewährt oder verweigert wird.

10. Verfahren nach einem der vorhergehenden Ansprüche 7 bis 9, **dadurch gekennzeichnet, daß** für die erfaßten und gespeicherten Personendaten ein benutzerdefiniertes Anwenderprogramm, insbesondere ein Anwenderprofil, gespeichert und voreingestellt wird.

11. Verfahren nach einem der vorhergehenden Ansprüche 7 bis 10, **dadurch gekennzeichnet, daß** eine personenbezogene Schweißdokumentation in der Speichereinheit (31) von der Steuervorrichtung (4) oder im Zusatzmodul (27) durchgeführt wird.

12. Verfahren nach einem der vorhergehenden Ansprüche 7 bis 11, **dadurch gekennzeichnet, daß** das Schweißgerät (1) oder die Stromquelle (2) über eine standardisierte Schnittstelle (45) mit einem Computernetzwerk und mit einem zentralen Sicherheitsverwaltungssystem, in dem sämtliche Personendaten gespeichert werden, einen Datenaustausch durchführt.

13. Verfahren nach einem der vorhergehenden Ansprüche 7 bis 12, **dadurch gekennzeichnet, daß** den gespeicherten Personendaten eine Kennung oder Benutzerkennung zugeordnet wird.

14. Schweißgerät (1) oder Stromquelle (2) für ein Schweißgerät (1), mit einer Steuervorrichtung (4), die durch eine Mikroprozessorsteuerung mit einer Speichereinheit (31) gebildet ist, einem Leistungsteil (3), insbesondere einer Inyerterstromquelle, und gegebenenfalls zusätzlichen Komponenten, wie beispielsweise einem Schweißbrenner (10), einem Drahtvorschubgerät (11) usw., die über entsprechende Schnittstellen (45) mit dem Schweißgerät (1) oder der Stromquelle (2) verbunden sind, **dadurch gekennzeichnet, daß** mit der Steuervorrichtung (4) bzw. mit dem Schweißgerät (1) oder der Stromquelle (2) ein Zusatzmodul (50) für eine Benutzererkennung und/oder eine Berechtigungsvergabe, beispielsweise mittels einem Transpondersystem und/oder einem Magnetkartensystem und/oder einem Chipkartensystem und/oder einem Bar-Codesystem und/oder einem Speichersystem und/oder einem Funkidentifikationssystem oder dgl., zur Erkennung eines Identifikationselementes verbunden ist und von der Steuervorrichtung (4) eine Festlegung der Berechtigung gen verschiedener Benutzer und eine Zuordnung von personenspezifischen von einem Benutzen vorgenommen Schweißeinstellungen zu dem Benutzer entsprechend einer Kennung oder einem Identitikationscode des Identifikationselementes durchführbar ist, wobei von der Steuervorrichtung (4) bei neuerlichem Aktivieren bzw. neuerlicher Inbetriebnahme des Schweißgerätes (1) oder der Stromquelle (2) über das Zusatzmodul (50), insbesondere über das Transpondersystem (51), mit Hilfe des selben Identifikationselementes, insbesondere des selben Transponders (54), eine Wiederherstellung eines identifikationsbezogenen Ausschaltzustandes durchführbar ist.

15. Schweißgerät (1) oder Stromquelle (2) nach Anspruch 14, **dadurch gekennzeichnet, daß** im Identifikationselement eine Kennung oder ein Identifikationscode gespeichert ist und das Zusatzmodul (50) Mittel zum Auslesen dieser Kennung bzw. des Codes umfaßt.

16. Schweißgerät (1) oder Stromquelle (2) nach Anspruch 15, **dadurch gekennzeichnet, daß** die Mittel zum Auslesen des Identifikationscodes, wie beispielsweise eines Transpondercodes, durch einen Sender (52) und/oder einen Empfänger (53) gebildet sind.

17. Schweißgerät (1) oder Stromquelle (2), nach einem der Ansprüche 14 bis 16, **dadurch gekennzeichnet, daß** das Zusatzmodul (50) über eine standardisierte Schnittstelle (45), welche über Leitungen (46) oder ein Bussystem mit der Steuervorrichtung (4) verbunden ist, gekoppelt ist.

18. Schweißgerät (1) oder Stromquelle (2) nach einem der Ansprüche 14 bis 17, **dadurch gekennzeichnet, daß** das Zusatzmodul (50) eine Steuervorrichtung, insbesondere eine Mikroprozessorsteuerung aufweist.

19. Schweißgerät (1) oder Stromquelle (2) nach einem der Ansprüche 14 bis 18, **dadurch gekennzeichnet, daß** das Zusatzmodul (50) in zumindest einer Komponente des Schweißgerätes (1), wie beispielsweise einer Fernbedienung bzw. einem Fernregler und/oder einem Schweißbrenner (10) und/oder einer externen Halterung und/oder einem Drahtvorschubgerät und/oder einem Kühlgerät und/oder einem Schlauchpaket (23) und/oder einem Roboterschrank und/oder einer Roboterkonsole und/oder einer Steuerungsfront und/ oder einer Ein- und/oder Ausgabevorrichtung (22) oder dergleichen angeordnet ist.

20. Schweißgerät (1) oder Stromquelle (2) nach einem der Ansprüche 14 bis 19, **dadurch gekennzeichnet, daß** unterschiedliche Komponenten des Schweißgerätes (1) mit unterschiedlichen Zusatzmodulen (50) ausgebildet sind.

21. Schweißgerät (1) oder Stromquelle (2) nach einem der Ansprüche 14 bis 20, **dadurch gekennzeichnet, daß** das Identifikationselement, insbesondere der Transponder (54), durch einen frei programmierbaren Transponder oder durch frei programmierbare Speicherelemente gebildet ist.

22. Schweißgerät (1) oder Stromquelle (2) nach einem der Ansprüche 14 bis 21, **dadurch gekennzeichnet, daß** bei einem Einsatz eines Transpoadersystems (51) dieses eine Induktionsschleife zu einer Energieversorgung für den Transponder (54) aufweist.

23. Schweißgerät (1) oder Stromquelle (2) nach einem der Ansprüche 14 bis 22, **dadurch gekennzeichnet, daß** das Hentinlcationselement durch den Transponder (54) gebildet ist, der in einer Berechtigungskarte für ein Zutrittssystem oder einer SIM-Karte oder einer Chip-Karte oder einer Karte mit einem Bar-Code oder einem Autoschlüssel mit integriertem Transponder (54) für eine Wegfahrsperre angeordnet ist.

24. Verfahren zum Festlegen und/oder Feststellen einer Benutzerberechtigung und zum Zuordnen von personenspezifischen Schweißeinstellungen für ein Schweißgerät (1) bzw. eine Schweißanlage oder eine Stromquelle (2) für ein Schweißgerät (1), bei dem mit personenbezogenen Daten aus einer Speichereinheit (31) einer Steuervorrichtung (4) des Schweigerätes (1) eine Einstellung, Steuerung oder Regelung des Schweißgerätes (1) bzw. der Schweißanlage oder der Stromquelle (2) durchgeführt wird, wobei von einem Zusatzmodul (50) ein Identifikationscode eines Identifikationselementes, insbesondere ein Transpondercode eines Transponders, festgestellt wird, worauf eine Abfrage bezüglich einer Übereinstimmung dieses Identifikationscodes unter in der Speichereinheit hinterlegten Codes oder Kennungen durchgeführt wird, und bei Übereinstimmung Benutzerberechtigungsdaten und personenspezifische Schweißeinstellungen, welche diesem Identifikationscode, insbesondere diesem Transpondercode, zugeordnet sind, aus der Speichereinheit (31) ausgelesen werden und daraufhin eine Benutzung des Schweißgerätes (1) bzw. der Schweißanlage gestattet wird und eine entsprechende Einstellung, Steuerung oder Regelung des Schweißgerätes (1) bzw. der Schweißanlage durchgeführt wird und von der Steuervorrichtung (4) eine Festlegung der Berechtigungen verschiedener Benutzer und eine Zuordnung von personenspezifischen und von einen Benutzer vorgenommen Schweißeinstellungen zu dem Benutzer entsprechend dem Identifikationscode des Identifikationselementes durchgeführt wird, wobei von der Steuervorrichtung (4) bei neuerlichem Aktivieren bzw. neuerlicher Inbetriebnahme des Schweißgerätes (1) oder der Stromquelle (2) über das Zusatzmodul (50), insbesondere über das Transpondersystem (51), mit Hilfe des selben Identifikationselementes, insbesondere des selben Transponders (54), eine Wiederherstellung eines identitikationsbezogenen Ausschaitzustandes durchgeführt wird.

25. Verfahren nach Anspruch 24, **dadurch gekennzeichnet, daß** das Zusatzmodul (50) als Diebstahlsschutz verwendet wird, wobei bei Übereinstimmung des Identifikationscodes, insbesondere des Transpondercodes, mit in der Speichereinheit (31) hinterlegten Daten der Zugang zu bestimmten bzw. allen Datenfunktionen und Anwendungen gewährt wird und bei Übermittlung eines Identifikationscodes, welcher zuvor nicht in der Speichereinheit (31) hinterlegt wurde, der Zugriff bzw. die Inbetriebnahme verweigert wird.

26. Verfahren nach einem der Ansprüche 24 oder 25, **dadurch gekennzeichnet, daß** neue Identifikationscodes, insbesondere neue Transpondercodes, durch einen Lernprozeß des Zusatzmodules (50) in die Speichereinheit (31) aufgenommen werden.

27. Verfahren nach einem der Anspruche 24 bis 26, **dadurch gekennzeichnet, daß** der Lernprozeß durch ein übergeordnetes System, beispielsweise ein mit dem Schweißgerät (1) verbundenes Sicherheitsverwaltungssystem bzw. Hauszutrittskontrollsystem, durchgeführt wird.

28. Verfahren nach einem der Ansprüche 24 bis 27, **dadurch gekennzeichnet, daß** durch das Zusatzmodul (50) eine personenbezogene oder eine kennungs- bzw. codebezogene Datendokumentation durchgeführt wird.

## Claims

1. Welding device (1) or current source (2) for a welding device (1), with a control system (4), preferably comprising a microprocessor controller with a memory unit (31), a power component (3), in particular a current-inverting source, and additional components such as a welding torch (10), a wire feed device (11), etc., which are connected to the welding device (1) or the current source (2) via appropriate interfaces (45), **characterised in that** an add-on module (27) for identifying a person on the basis of biometric physical characteristics by means of fingerprint recognition and/or voice recognition and/or iris recognition and/or recognition of a facial shape and/or recognition of writing or similar is connected to the control system (4) or to the welding device (1) or to the current source (2) and one or more user-defined programmes can be set up from the control system (4) by loading one or more user profiles, so that when a user has been recognised by the add-on module (27) the corresponding user profile is loaded from the memory unit (31) by the control system (4), and when the welding device (1) or current source (2) is activated or switched on again by the same person, the personal status of this person from the previous shut-down can be restored by the control system (4).

2. Welding device (1) or current source (2) as claimed in claim 1, **characterised in that** the add-on module (27) is a sensor, such as a fingerprint sensor, a video unit, etc..

3. Welding device (1) or current source (2) as claimed in claim 1 or 2, **characterised in that** the add-on module (27) has a control system, in particular a microprocessor controller or a micro-chip.

4. Welding device (1) or current source (2) as claimed in one of the preceding claims, **characterised in that** the add-on module (27) is disposed in one or more components of the welding device (1), such as a remote operating system and remote control and/or a welding torch (10) and/or an external holder and/or a wire feed device (11) and/or a cooling device and/or a hose pack (23) and/or a robot cabinet and/or a robot control panel and/or a control panel and/or an input and/or output device (22) or such like.

5. Welding device (1) or current source (2) as claimed in one of the preceding claims, **characterised in that** different add-on modules (27) may be used in different components.

6. Welding device (1) or current source (2) as claimed in one of the preceding claims, **characterised in that** the add-on module (27) is coupled with a standardised interface (45), which is connected to the control system (4) by means of lines (46) or a bus system.

7. Method of fixing and/or setting a user authorisation and/or for allocating personalised welding settings for a welding device (1) and welding system or a current source (2) for a welding device (1), in which stored personalised data can be loaded into a memory unit (31) of a control system (4) and the welding device (1) and welding system or the current source (2) can be configured, controlled or regulated accordingly, whereby a personal recognition system can be run by an add-on module (27) on the basis of an electronic fingerprint and/or voice recognition and/or iris recognition and/or recognition of a facial shape and/or recognition of writing or similar, whereupon the detected personal data is forwarded to the control system (4) of the welding device (1) or the current source (2) for checking and one or more user-defined programmes can be pre-set by loading one or more user profiles, so that the corresponding user profile can be loaded by the control system (4) from the memory unit (31) at the control system (4) when a user is recognised by the add-on module (27), and when the welding device (1) or current source (2) is activated or switched on again by the same person, the personal status of this person from the previous shut-down can be restored by the control system (4).

8. Method as claimed in claim 7, **characterised in that** a desired/actual comparison with data stored in a memory unit (31) is run by the add-on module (27) or the control system (4) of the welding device (1) or the current source (2).

9. Method as claimed in claim 7 or 8, **characterised in that** the add-on module (27) is used to detect biometric physical characteristics as an anti-theft means, whereby authorised persons are granted or denied access to specific data, functions and applications by the control system (4).

10. Method as claimed in one of the preceding claims 7 to 9, **characterised in that** a user-defined application programme, in particular a user profile, is stored and set as a default for the detected and stored personal data.

11. Method as claimed in one of the preceding claims 7 to 10, **characterised in that** a personalised welding log is kept in the memory unit (31) by the control system (4) or in the add-on module (27).

12. Method as claimed in one of the preceding claims 7 to 11, **characterised in that** the welding device (1) or the current source (2) runs a data exchange via a standardised interface (45) with a computer network and with a central security administration system, in which all personal data is stored.

13. Method as claimed in one of the preceding claims 7 to 12, **characterised in that** a password or user code is assigned to the stored personal data.

14. Welding device (1) or current source (2) for a welding device (1), with a control system (4) comprising a microprocessor controller with a memory unit (31), a power component (3), in particular a current-inverting source, and optionally additional components such as a welding torch (10), a wire feed device (11), etc., which are connected to the welding device (1) or the current source (2) via appropriate interfaces (45), **characterised in that** an add-on module (50) for identifying a user and/or issuing authorisations is connected to the control system (4) or to the welding device (1) or to the current source (2) by means of a transponder system and/or a magnetic card system and/or a chip card system and/or a bar code system and/or a memory system and/or a radio identification system or similar, for example, in order to recognise an identification element and the control system (4) can run a routine fixing the authorisations of different users and assign personalised welding settings previously entered by a user to a user on the basis of a password or an identification code of the identification element, and whenever the welding device (1) or the current source (2) is activated or switched on via the add-on module (50), in particular via the transponder system (51), with the aid of the same identification element, in particular the same transponder (54), the status from the previous shut-down relating to that identification is restored by the control system (4).

15. Welding device (1) or current source (2) as claimed in claim 14, **characterised in that** a password or an identification code is stored in the identification element and the add-on module (50) has means for reading this password or code.

16. Welding device (1) or current source (2) as claimed in claim 15, **characterised in that** the means for reading the identification code, such as a transponder code, are provided in the form of a transmitter (52) and/or a receiver (53).

17. Welding device (1) or current source (2) as claimed in one of claims 14 to 16, **characterised in that** the add-on module (50) is coupled via a standardised interface (45) connected to the control system (4) by means of lines (46) or a bus system.

18. Welding device (1) or current source (2) as claimed in one of claims 14 to 17, **characterised in that** the add-on module (50) has a control system, in particular a microprocessor controller.

19. Welding device (1) or current source (2) as claimed in one of claims 14 to 18, **characterised in that** the add-on module (50) is disposed in at least one of the components of the welding device (1), such as a remote operating system or remote control and/or a welding torch (10) and/or an external holder and/or a wire feed device and/or a cooling device and/or a hose pack (23) and/or a robot cabinet and/or a robot control panel and/or a control panel and/or an input and/or output device (22) or such like.

20. Welding device (1) or current source (2) as claimed in one of claims 14 to 19, **characterised in that** different components of the welding device (1) are provided with different add-on modules (50).

21. Welding device (1) or current source (2) as claimed in one of claims 14 to 20, **characterised in that** the identification element, in particular the transponder (54), is provided in the form of a freely programmable transponder or freely programmable memory elements.

22. Welding device (1) or current source (2) as claimed in one of claims 14 to 21, **characterised in that** if a transponder system (51) is used, it has an induction loop for supplying power to the transponder (54).

23. Welding device (1) or current source (2) as claimed in one of claims 14 to 22, **characterised in that** the identification element is the transponder (54), which is disposed in an authorisation card for an entry system or a SIM card or a chip card or a card with a bar code or a car key with integrated transponder (54) for a barrier.

24. Method of fixing and/or setting a user authorisation and/or for allocating personalised welding settings for a welding device (1) and a welding system or a current source (2) for a welding device (1), in which stored personalised data can be loaded from a memory unit (31) of a control system (4) of the welding device (1) and the welding device (1) and welding system or the current source (2) can be configured, controlled or regulated accordingly, and an identification code of an identification element, in particular a transponder code of a transponder, can be set from an add-on module (50), whereupon a check is run to ascertain whether this identification code matches a code or password stored in the memory unit and, in the event of a match, user authorisation data and/or personalised welding settings allocated to this identification code, in particular this transponder code, can be read form the memory unit (31) to authorise use of the welding device (1) and welding system, and the welding device (1) and welding system are configured, controlled or regulated accordingly, and the control system (4) runs a routine fixing the authorisations of different users and allocates personalised welding settings previously entered by a user to a user on the basis of a password or an identification code of the identification element, and whenever the welding device (1) or the current source (2) is activated or switched on via the add-on module (50), in particular via the transponder system (51), with the aid of the same identification element, in particular the same transponder (54), the status from the previous shut-down relating to that identification is restored by the control system (4).

25. Method as claimed in claim 24, **characterised in that** the add-on module (50) is used as an anti-theft system and if the identification code, in particular the transponder code, matches the data stored in the memory unit (31), access is granted to specific or all data functions and applications, whereas if an identification code is detected which was not stored in the memory unit (31) beforehand, access or operation is denied.

26. Method as claimed in one of claims 24 or 25, **characterised in that** new identification codes, in particular new transponder codes, can be recorded in the memory unit (31) by means of a learning process of the add-on module (50).

27. Method as claimed in one of claims 24 to 26, **characterised in that** the learning process is run by a primary system, for example a security administration system or entry control system to the building connected to the welding device (1).

28. Method as claimed in one of claims 24 to 27, **characterised in that** a personalised or password-related or code-related data log is kept by the add-on module (50).

## Revendications

1. Appareil de soudage (1) ou source de courant (2) pour un appareil de soudage (1), avec un dispositif de commande (4) qui est formé par une commande à microprocesseur avec une unité de stockage (31), une partie de puissance (3), en particulier une source de courant inverseur et des composants additionnels, comme par exemple un chalumeau (10), un appareil de poussée de fil (11) etc., qui sont reliés par des interfaces correspondantes (45) à l'appareil de soudage (1) ou à la source de courant (2), **caractérisé en ce qu'**il est relié au dispositif de commande (4) respectivement à l'appareil de soudage (1) ou à la source de courant (2) un module additionnel (27) pour une identification de personne par des caractéristiques de corps biométriques au moyen d'une reconnaissance d'empreinte digitale et/ou d'une reconnaissance vocale et/ou d'une reconnaissance d'iris et/ou d'une reconnaissance de forme de visage et/ou d'une reconnaissance de dynamique d'écriture ou analogue, et **en ce qu'**au dispositif de commande (4), un ou plusieurs programmes définis pour l'utilisateur, par chargement d'un ou de plusieurs profils d'utilisateur correspondants, peuvent être préréglés **en ce qu'**après la reconnaissance d'un utilisateur par le module d'addition (27), le dispositif de commande (4) charge le profil d'utilisateur correspondant de l'unité de stockage (31); où lors d'une activation respectivement mise en service renouvelée de l'appareil de soudage (1) ou de la source de courant (2) par la même personne, un rétablissement de l'état de coupure personnel de cette personne peut être effectué par le dispositif de commande (4).

2. Appareil de soudage (1) ou source de courant (2) selon la revendication 1, **caractérisé en ce que** le module additionnel (27) est formé par un capteur, comme un capteur d'empreinte digitale, une unité vidéo, etc.

3. Appareil de soudage (1) ou source de courant (2) selon la revendication 1 ou 2, **caractérisé en ce que** le module additionnel (27) présente un dispositif de commande, en particulier une commande à microprocesseur ou une microplaquette.

4. Appareil de soudage (1) ou source de courant (2) selon l'une des revendications précédentes, **caractérisé en ce que** le module additionnel (27) est disposé dans un ou plusieurs composants de l'appareil de soudage (1), comme par exemple une commande à distance respectivement un régulateur à distance et/ou un chalumeau (10) et/ou un support externe et/ou un appareil de poussée de fil (11) et/ou un appareil de refroidissement et/ou un paquet de tuyaux (23) et/ou une armoire de robot et/ou une console de robot et/ou un front de commande et/ou un dispositif d'entrée et/ou de sortie (22) ou analogue.

5. Appareil de soudage (1) ou source de courant (2) selon l'une des revendications précédentes, **caractérisé en ce que** peuvent être placés dans des composants différents des modules d'addition différents (27).

6. Appareil de soudage (1) ou source de courant (2) selon l'une des revendications précédentes, **caractérisé en ce que** le module additionnel (27) est couplé à une interface standard (45) qui est reliée par des lignes (46) ou un système de bus au dispositif de commande (4).

7. Procédé de détermination et/ou vérification d'une autorisation d'utilisateur et/ou pour l'association d'installations de soudage spécifiques à des personnes pour un appareil de soudage (1) respectivement une installation de soudage ou une source de courant (2) pour un appareil de soudage (1); dans lequel sont chargées des données se rapportant à la personne, stockées dans une unité de stockage (31) d'un dispositif de commande (4), et un ajustement, commande ou réglage correspondant de l'appareil de soudage (1) respectivement de l'installation de soudage ou de la source de courant (2) est effectué, où est exécuté par un module d'addition (27) une reconnaissance de la personne par des caractéristiques corporelles biométriques, comme par exemple une empreinte digitale électronique et/ou une reconnaissance vocale et/ou une reconnaissance d'iris et/ou une reconnaissance de forme du visage et/ou une reconnaissance de dynamique d'écriture ou analogue, à la suite de quoi les données déterminées se rapportant à la personne sont transmises en vue d'une vérification au dispositif de commande (4) de l'appareil de soudage (1) ou de la source de courant (2) et en ce qu'un ou plusieurs programmes définis pour l'utilisateur, par chargement d'un ou de plusieurs profils d'utilisateur, sont préréglés en ce qu'après la reconnaissance d'un utilisateur par le module d'addition (27), le dispositif de commande (4) charge le profil d'utilisateur correspondant de l'unité de stockage (31), où lors d'une activation respectivement mise en service renouvelée de l'appareil de soudage (1) ou de la source de courant (2) par la même personne, un rétablissement de l'état de coupure personnel de cette personne peut être effectué par le dispositif de commande (4).

8. Procédé selon la revendication 7, **caractérisé en ce que** par le module d'addition (27) ou le dispositif de commande (4) de l'appareil de soudage (1) ou de la source de courant (2), une comparaison consigne-réelle est effectuée avec des données stockées dans une unité de stockage (31).

9. Procédé selon la revendication 7 ou 8, **caractérisé en ce que** le module d'addition (27) est utilisé pour détecter des caractéristiques corporelles biométriques comme protection contre le vol, où est accordé ou refusé par le dispositif de commande (4) à des personnes autorisées l'accès à des données, fonctions et utilisations déterminées.

10. Procédé selon l'une des revendications précédentes 7 à 9, **caractérisé en ce que** pour les données détectées et stockées de la personne, un programme d'utilisateur défini pour l'utilisateur, en particulier un profil d'utilisateur est stocké et préréglé.

11. Procédé selon l'une des revendications précédentes 7 à 10, **caractérisé en ce qu'**une documentation de soudage se rapportant à la personne est effectuée dans l'unité de stockage (31) par le dispositif de commande (4) ou dans le module d'addition (27).

12. Procédé selon l'une des revendications précédentes 7 à 11, **caractérisé en ce que** l'appareil de soudage (1) ou la source de courant (2) exécute par une interface standard (45) avec un réseau d'ordinateur et avec un système de gestion de sécurité central, dans lequel sont stockées toutes les données des personnes, un échange des données.

13. Procédé selon l'une des revendications précédentes 7 à 12, **caractérisé en ce qu'**il est associé aux données stockées des personnes une caractérisation ou une reconnaissance d'utilisateur.

14. Appareil de soudage (1) ou source de courant (2) pour un appareil de soudage (1), avec un dispositif de commande (4) qui est formé par une commande à microprocesseur avec une unité de stockage (31), une partie de puissance (3), en particulier une source de courant inverseur et, le cas échéant, des composants additionnels, comme par exemple un chalumeau (10), un appareil de poussée de fil (11), etc., qui sont reliés par des interfaces correspondantes (45) à l'appareil de soudage (1) ou à la source de courant (2), **caractérisé en ce qu'**il est relié au dispositif de commande (4) respectivement à l'appareil de soudage (1) ou à la source de courant (2) un module d'addition (50) pour une reconnaissance d'utilisateur et/ou une attribution d'autorisation, par exemple au moyen d'un système de répondeur d'identification et/ou un système de carte magnétique et/ou un système de carte à puce et/ou un système de code à barres et/ou un système de mémorisation et/ou un système de radio-identification ou analogue, pour la reconnaissance d'un élément d'identification, et **en ce que** le dispositif de commande (4) peut effectuer une détermination des autorisations d'utilisateurs différents et une association de réglages de soudage, effectués par un utilisateur, spécifiques à la personne, à l'utilisateur conformément à une reconnaissance respectivement un code d'identification de l'élément d'identification, où est exécuté par le dispositif de commande (4), lors d'une réactivation respectivement d'une remise en fonctionnement de l'appareil de soudage (1) ou de la source de courant (2), par le module d'addition (50), en particulier par le système de répondeur d'identification (51), à l'aide du même élément d'identification, en particulier du même répondeur d'identification (54), un rétablissement d'un état de coupure se rapportant à l'identification.

15. Appareil de soudage (1) ou source de courant (2) selon la revendication 14, **caractérisé en ce qu'**il est stocké dans l'élément d'identification une caractérisation respectivement un code d'identification, et **en ce que** le module d'addition (50) comporte des moyens pour lire cette caractérisation respectivement le code.

16. Appareil de soudage (1) ou source de courant (2) selon la revendication 15, **caractérisé en ce que** les moyens de lecture du code d'identification, comme par exemple d'un code de répondeur d'identification, sont formés par un émetteur (52) et/ou un récepteur (53).

17. Appareil de soudage (1) ou source de courant (2) selon l'une des revendications 14 à 16, **caractérisé en ce que** le module d'addition (50) est couplé par une interface standard (45) qui est reliée par des lignes (46) ou un système de bus au dispositif de commande (4).

18. Appareil de soudage (1) ou source de courant (2) selon l'une des revendications 14 à 17, **caractérisé en ce que** le module d'addition (50) présente un dispositif de commande, en particulier une commande à microprocesseur.

19. Appareil de soudage (1) ou source de courant (2) selon l'une des revendications 14 à 18, **caractérisé en ce que** le module d'addition (50) est disposé dans au moins un composant de l'appareil de soudage (1), comme par exemple une commande à distance, respectivement un régulateur à distance et/ou un chalumeau (10) et/ou un support externe et/ou un appareil de poussée de fil et/ou un appareil de refroidissement et/ou un paquet de tuyaux (32) et/ou une armoire de robot et/ou une console de robot et/ou un front de commande et/ou un dispositif d'entrée et/ou d'émission (22) ou analogue.

20. Appareil de soudage (1) ou source de courant (2) selon l'une des revendications 14 à 19, **caractérisé en ce que** des composants différents de l'appareil de soudage (1) sont réalisés avec des modules d'addition (50) différents.

21. Appareil de soudage (1) ou source de courant (2) selon l'une des revendications 14 à 20, **caractérisé en ce que** l'élément d'identification, en particulier le répondeur d'identification (54), est formé par un répondeur d'identification pouvant être programmé librement ou par des éléments de mémoire pouvant être programmés librement.

22. Appareil de soudage (1) ou source de courant (2) selon l'une des revendications 14 à 21, **caractérisé en ce que**, lors d'une utilisation d'un système de répondeur d'identification (51), celui-ci présente une boucle d'induction à une alimentation en énergie pour le répondeur d'identification (54).

23. Appareil de soudage (1) ou source de courant (2) selon l'une des revendications 14 à 22, **caractérisé en ce que** l'élément d'identification est formé par le répondeur d'identification (54) qui est disposé dans une carte d'autorisation pour un système d'accès ou une carte SIM ou une carte à puce ou une carte avec un code à barres ou dans une clef de voiture à un répondeur d'identification intégré (54) pour un blocage de roulement.

24. Procédé de détermination et/ou de constatation d'une autorisation d'utilisateur et/ou pour associer des réglages de soudage spécifiques à la personne pour un appareil de soudage (1) respectivement une installation de soudage ou une source de courant (2) pour un appareil de soudage (1), dans lequel est effectué avec des données se rapportant à la personne d'une unité de stockage (31) d'un dispositif de commande (4) de l'appareil de soudage (1) un ajustement, une commande ou un réglage de l'appareil de soudage (1) respectivement de l'installation de soudage ou de la source de courant (2), où par un module d'addition (50), un code d'identification d'un élément d'identification, en particulier un code d'un répondeur d'identification est déterminé, et ensuite, une interrogation concernant cette coïncidence de ce code d'identification est effectuée parmi les codes respectivement caractérisations stockés dans l'unité de stockage et, lors d'une coïncidence des données d'autorisation d'utilisateur et/ou des réglages de soudage spécifiques à la personne, qui sont associés à ce code d'identification, en particulier à ce code de répondeur d'identification, sont extraites de l'unité de stockage (31) et ensuite, une utilisation de l'appareil de soudage (1) respectivement de l'installation de soudage est autorisée respectivement un ajustement, commande ou réglage correspondant de l'appareil de soudage (1) respectivement de l'installation de soudage est effectué et, par le dispositif de commande (4), une détermination des autorisations d'utilisateurs différents est effectuée, ainsi qu'une attribution de réglages de soudage, effectués par l'utilisateur, spécifiques à la personne, à l'utilisateur est effectuée en accord avec le code d'identification de l'élément d'identification, où est exécuté par le dispositif de commande (4), lors d'une réactivation respectivement d'une remise en fonctionnement de l'appareil de soudage (1) ou de la source de courant (2), par le module d'addition (50), en particulier par le système de répondeur d'identification (51), à l'aide du même élément d'identification, en particulier du même répondeur d'identification (54), un rétablissement d'un état de coupure se rapportant à l'identification.

25. Procédé selon la revendication 24, **caractérisé en ce que** le module d'addition (50) est utilisé comme protection contre le vol, où lors d'une coïncidence du code d'identification, en particulier du code du répondeur d'identification, avec des données stockées dans l'unité de stockage (31), l'accès à certaines respectivement toutes les fonctions de données et utilisations est accordé et, lors de la transmission d'un code d'identification, qui n'a pas été stocké avant dans l'unité de stockage (31), l'accès respectivement la mise en fonctionnement est refusé.

26. Procédé selon l'une des revendications 24 ou 25, **caractérisé en ce que** de nouveaux codes d'identification, en particulier des nouveaux codes de répondeur d'identification, sont entrés par un processus d'apprentissage du module d'addition (50) dans l'unité de stockage (31).

27. Procédé selon l'une des revendications 24 à 26, **caractérisé en ce que** le processus d'apprentissage est effectué par un système subordonné, par exemple un système de gestion de sécurité relié à l'appareil de soudage (1) respectivement un système de contrôle d'accès au bâtiment.

28. Procédé selon l'une des revendications 24 à 27, **caractérisé en ce qu'**il est effectué par le module d'addition (50) une documentation des données se rapportant à la personne ou se rapportant à la reconnaissance respectivement au code.
